# EUROPEAN PATENT APPLICATION

(11) **EP 1 405 833 A1**
(43) Date of publication of application: **07.04.2004**
(21) Application number: 02736087.4
(22) Date of filing: 13.06.2002
(51) Int. Cl.: C03B 37/018, C03B 8/04, G02B 6/00

(54) **DEVICE AND METHOD FOR PRODUCING STACK OF FINE GLASS PARTICLES**

(30) Priority: 14.06.2001 JP 2001180404; 19.06.2001 JP 2001185174; 19.06.2001 JP 2001185175
(71) Applicant: Sumitomo Electric Industries, Ltd., Osaka-shi, Osaka 541-0041 (JP)
(72) Inventor: ISHIHARA, T. Yokohama Works of Sumitomo El.Ind.Ltd, Yokohama-shi, Kanagawa 244-0844 (JP)
(74) Representative: HOFFMANN - EITLE
(86) International application number: PCT/JP2002/005907
(87) International publication number: WO 2002/102729

(57) **Abstract**

To provide an apparatus for manufacturing a glass particles deposit in which it is possible to effectivelyprevent the foreign matter from being deposited on or mixed into the glass particles deposit during the manufacturing operation. The apparatus for manufacturing the glass particles deposit comprises an upper funnel, a reaction vessel and a lower funnel, wherein the glass particulates are deposited around the outer circumference of a starting rod supported by a support rod within the reaction vessel while the starting rod is being rotated around its axis and reciprocated up and down, characterized in that a sleeve made of quartz separating an inner wall of the reaction vessel and a central rotation member is installed inside the reaction vessel.

## Description

### Field of the Invention

The present invention relates to an apparatus and method for manufacturing a glass particles deposit by an OVD method, and more particularly to an apparatus and method for manufacturing a glass particles deposit in which it is possible to prevent the foreign matter from being mixed into the glass particles deposit during the depositing operation.

### Description of the Prior Art

When the glass particles deposit is manufactured using an OVD method in which glass particulates are deposited in a radial direction around a starting rod by supplying a glass source gas of SiCl₄ or GeCl₄ from a burner into an oxyhydrogen flame and producing SiO₂ or GeO₂ glass particulates owing to a flame hydrolysis reaction, the glass particulates produced by the burner are deposited around the periphery of the starting rod, but glass particulates undeposited float within a space of the manufacturing apparatus consisting of a reaction vessel with an upper funnel and a lower funnel.

Since the glass particulates are more likely to flow upward under the influence of high temperature gases, floating glass particulates adhere to an inner wall face of the manufacturing apparatus, particularly the inner wall face of the reaction vessel or the upper funnel, and if the amount of adhering particulates is increased, they are exfoliated and deposited as the foreign matter on the surface of the glass particles deposit. Ametallic dust may arise, depending on the constituent material of the reaction vessel.

If the foreign matter is deposited on the glass particles deposit, the problem arises that voids are caused in a sintering or vitrifying process, and the optical fiber is disconnected when drawn, or has a greater transmission loss.

Accordingly, when manufacturing the glass particles deposit, it is required that the amount of foreign matter mixed into the glass particles deposit is reduced as much as possible, for which various methods have been examined and offered.

For example, in JP-A-5-116979 or JP-A-5-116980, a method was disclosed for preventing the foreignmatter from being mixed into the glass particles deposit by blowing a clean air or oxyhydrogen flame to the starting rod (glass particles deposit) itself. However, if the clean air is directly blown onto a deposited face, an exfoliation (fracture) arises in the glass particulates. When the deposition plane is burnt by the oxyhydrogen flame, there is a problem that the glass particles deposit is likely to deform (especially when the soot bulk density is lower.)

In JP-A-8-217480, there was disclosed an invention regarding bedewing preventing means for a porous parent material manufacturing reaction vessel in suspension, in which there is some effect in suppressing the production of metallic oxides by making the reaction vessel of Ni or Ni based alloy. However, if Ni itself is mixed into the glass particles deposit, the disconnection of fiber is caused or the transmission loss is increased.

It is an object of the present invention to provide a glass particles deposit manufacturing apparatus and method in which when a glass particles deposit is manufactured, employing the glass particles deposit manufacturing apparatus consisting of a reaction vessel, an upper funnel and a lower funnel, it is possible to effectivelyprevent the foreign matter from being deposited or mixed into the glass particles deposit during the manufacturing operation.

### Summary of the Invention

The present invention employs the following constitutions to solve the above-mentioned problems.
(1) An apparatus for manufacturing a glass particles deposit, comprising an upper funnel having an upper lid through which a support rod connected to a lifting device is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that a sleeve made of quartz is installed inside the reaction vessel.
(2) An apparatus for manufacturing a glass particles deposit, comprising an upper funnel having an upper lid through which a support rod connected to a lifting device is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that a sleeve made of quartz is installed inside the upper funnel and the lower funnel.
(3) An apparatus for manufacturing a glass particles deposit, comprising an upper funnel having an upper lid through which a support rod connected to a lifting device is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that a difference between the inner diameter of a support rod insertion opening of the upper lid and the outer diameter of the support rod is made 10mm or less, and an outer circumferential wall having a height of 5mm or more is provided around the outer circumference of the support rod insertion opening.
(4) An apparatus for manufacturing a glass particles deposit, comprising an upper funnel having an upper lid through which a support rod connected to a lifting device is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that a bellows pipe linking the upper lid and the lifting device upwardly provided is installed in a form covering the support rod.
(5) The apparatus for manufacturing the glass particles deposit according to (1) or (2), characterized in that a difference between the inner diameter of a support rod insertion opening of the upper lid and the outer diameter of the support rod is 10mm or less, and an outer circumferential wall having a height of 5mm or more is provided around the outer circumference of the support rod insertion opening.
(6) The apparatus for manufacturing the glass particles deposit according to (1) or (2) , characterized in that a bellows pipe linking the upper lid and the lifting device upwardly provided is installed in a form covering the support rod.
(7) The apparatus for manufacturing the glass particles deposit according to (1) or (2) , characterized in that the sleeve made of quartz is cylindrical.
(8) The apparatus for manufacturing the glass particles deposit according to (3) or (5), characterized in that a clean gas inlet tube for introducing a clean gas between the support rod and the outer circumferential wall is installed.
(9) The apparatus for manufacturing the glass particles deposit according to (4) or (6), characterized in that a clean gas inlet tube for introducing a clean gas into the bellows pipe is installed.
(10) Amethod formanufacturing a glass particles deposit, comprising an upper funnel having an upper lid through which a support rod connected to a lifting device is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that the glass particles deposit is manufactured in the reaction vessel with a sleeve made of quartz placed inside.
(11) Amethod for manufacturing a glass particles deposit, comprising an upper funnel having an upper lid through which a support rod connected to a lifting device is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that the glass particles deposit is manufactured using the upper funnel and the lower funnel with a sleeve made of quartz placed inside.
(12) Amethod for manufacturing a glass particles deposit, comprising an upper funnel having an upper lid through which a support rod connected to a lifting device is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that the glass particles deposit is manufactured in which a difference between the inner diameter of a support rod insertion opening of the upper lid and the outer diameter of the support rod is 10mm or less, and an outer circumferential wall having a height of 5mm or more is provided around the outer circumference of the support rod insertion opening.
(13) A method for manufacturing a glass particles deposit, comprising an upper funnel having an upper lid through which a support rod connected to a lifting device is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that the glass particles deposit is manufactured using an apparatus in which a bellows pipe links the upper lid and the lifting device upwardly provided placed in a form covering the support rod.
(14) The method for manufacturing the glass particles deposit according to (10) or (11), characterized in that the glass particles deposit is manufactured in which a difference between the inner diameter of a support rod insertion opening of the upper lid and the outer diameter of the support rod is 10mm or less, and an outer circumferential wall having a height of 5mm or more is provided around the outer circumference of the support rod insertion opening.
(15) The method for manufacturing the glass particles deposit according to (10) or (11), characterized in that the glass particles deposit is manufactured in which a bellows pipe links the upper lid and the lifting device upwardly provided is placed in a form covering the support rod.
(16) The method for manufacturing the glass particles deposit according to (10) or (11), characterized in that the glass particles deposit is manufactured in which the sleeve made of quartz is cylindrical and a difference between the inner diameter of the sleeve and the maximum outer diameter of the glass particles deposit is 100mm or less.
(17) The method for manufacturing the glass particles deposit according to (14), characterized in that the glass particles deposit is manufactured in which a clean gas inlet tube for introducing a clean gas between the support rod and the outer circumferential wall is installed.
(18) The method for manufacturing the glass particles deposit according to (15), characterized in that the glass particles deposit is manufactured in which a clean gas inlet tube for introducing a clean gas into the bellows pipe is installed.
(19) An apparatus for manufacturing a glass particles deposit, comprising an upper funnel having an upper lid through which a support rod is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that 50% or more of the constituent material of the reaction vessel is quartz.
(20) An apparatus for manufacturing a glass particles deposit, comprising an upper funnel having an upper lid through which a support rod is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that the reaction vessel, the upper funnel or the lower funnel is cylindrical, and a difference between the inner diameter of the reaction vessel, the upper funnel or the lower funnel and the maximum outer diameter of the glass particles deposit is 100mm or less.
(21) An apparatus for manufacturing a glass particles deposit, comprising an upper funnel having an upper lid through which a support rod is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that a disk moving along with the starting rod and having an outer circumferential wall for accepting a falling substance from above is installed above an effective part of the starting rod.
(22) An apparatus for manufacturing a glass particles deposit, comprising an upper funnel having an upper lid through which a support rod is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that a disk moving along with the starting rod is installed below an effective part of the starting rod.
(23) The apparatus for manufacturing the glass particles deposit according to any one of (20) to (22), characterized in that the reaction vessel, the upper funnel or the lower funnel is cylindrical, and a difference between the inner diameter of the reaction vessel, the upper funnel or the lower funnel and the outer diameter of the disk is 100mm or less.
(24) An apparatus for manufacturing a glass particles deposit, comprising an upper funnel having an upper lid through which a support rod is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that a gas inlet tube for introducing a clean gas into the upper funnel is attached downward so that an angle of the gas inlet tube to a central axis of the upper funnel is less than 90°.
(25) An apparatus for manufacturing a glass particles deposit, comprising an upper funnel having an upper lid through which a support rod is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that a gas inlet tube for introducing a clean gas into the lower funnel is attached upward so that an angle of the gas inlet tube to a central axis of the lower funnel is less than 90°.
(26) An apparatus for manufacturing a glass particles deposit, comprising an upper funnel having an upper lid through which a support rod is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that the upper lid has a dual structure without irregularities on the inner surface.
(27) The apparatus for manufacturing the glass particles deposit according to (26), characterized in that a difference between the inner diameter of the support rod insertion opening in the center of the upper lid and the outer diameter of the support rod is 40mm or less.
(28) An apparatus for manufacturing a glass particles deposit, comprising an upper funnel having an upper lid through which a support rod is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that an exhaust tube is place so that the central position of the exhaust tube is above an intermediate position between the uppermost burner and the lowermost burner.
(29) Amethod for manufacturing a glass particles deposit, using an apparatus formanufacturing the glass particles deposit, comprising an upper funnel having an upper lid through which a support rod is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that 50% or more of the constituent material of the reaction vessel is quartz to manufacture the glass particles deposit.
(30) The method for manufacturing the glass particles deposit according to (29), characterized in that the reaction vessel, the upper funnel or the lower funnel is cylindrical, and a difference between the inner diameter of the reaction vessel, the upper funnel or the lower funnel and the maximum outer diameter of the glass particles deposit is 100mm or less to manufacture the glass particles deposit.
(31) Amethod for manufacturing a glass particles deposit, using an apparatus for manufacturing the glass particles deposit, comprising an upper funnel having an upper lid through which a support rod is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that a disk moving along with the starting rod and having an outer circumferential wall for accepting a falling substance from above is installed above an effective part of the starting rod to manufacture the glass particles deposit.
(32) Amethod formanufacturing a glass particles deposit, using an apparatus formanufacturing the glassparticles deposit, comprising an upper funnel having an upper lid through which a support rod is inserted to be freely lifted, a reaction vessel provided with a burner and an exhaust pipe; and a lower funnel, wherein the glass particulates are deposited around the outer circumference of a starting rod supported by the support rod within the reaction vessel by an OVD method, characterized in that a disk moving along with the starting rod is installed below an effective part of the starting rod to manufacture the glass particles deposit.
(33) Amethod formanufacturinga glass particles deposit, using an apparatus for manufacturing the glass particles deposit, comprising an upper funnel having an upper lid through which a support rod is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that the reaction vessel, the upper funnel or the lower funnel is cylindrical, and a difference between the inner diameter of the reaction vessel, the upper funnel or the lower funnel and the outer diameter of the disk is 100mm or less tomanufacture the glass particles deposit.
(34) Amethod formanufacturing a glass particles deposit, using an apparatus formanufacturing the glass particles deposit, comprising an upper funnel having an upper lid through which a support rod is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that a clean gas containing dusts having a size of 0.3µm or greater at a density of 3.5×10⁴ /m³ or less is introduced into the upper funnel at a flow rate of one liter/min or more, and a gas inlet tube for introducing the clean gas into the upper funnel is attached downward so that an angle of the gas inlet tube to the central axis of the upper funnel is less than 90°.
(35) Amethod formanufacturing a glassparticles deposit, using an apparatus formanufacturing the glassparticles deposit, comprising an upper funnel having an upper lid through which a support rod is inserted to be freely lifted, a reaction vessel provided with a burner and an exhaust pipe; and a lower funnel, wherein the glass particulates are deposited around the outer circumference of a starting rod supported by the support rod within the reaction vessel by an OVD method, characterized in that a clean gas containing dusts having a size of 0.3µm or greater at a density of 3.5×10⁴ /m³ or less is introduced into the lower funnel at a flow rate of one liter/min or more, and a gas inlet tube for introducing the clean gas into the lower funnel is attached upward so that an angle of the gas inlet tube to the central axis of the lower funnel is less than 90°.
(36) Amethod formanufacturing a glassparticles deposit, using an apparatus formanufacturing the glass particles deposit, comprising an upper funnel having an upper lid through which a support rod is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that the upper lid has a dual structure without irregularities on the inner surface, and a clean gas containing dusts having a size of 0.3µm or greater at a density of 3.5×10⁴ /m³ or less is blown into a clearance portion between a support rod insertion opening in the center of the upper lid and the support rod at a flow rate of one liter/min or more to manufacture the glass particles deposit.
(37) The method for manufacturing the glass particles deposit according to (36), characterized in that a difference between the inner diameter of the support rod insertion opening in the center of the upper lid and the outer diameter of the support rod is 40mm or less.
   More desirably, the difference between the inner diameter. of the support rod insertion opening in the center of the upper lid and the outer diameter of the support rod is 10mm or less
(38) Amethod for manufacturing a glass particles deposit, using an apparatus for manufacturing the glass particles deposit, comprising an upper funnel having an upper lid through which a support rod is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that an exhaust tube is place so that the central position of the exhaust tube is above an intermediate position between the uppermost burner and the lowermost burner.
(39) Amethod for manufacturing a glass particles deposit, using an apparatus formanufacturing the glass particles deposit, comprising an upper funnel having an upper lid through which a support rod is inserted to be freely lifted, a reaction vessel provided with a burner and an exhaust pipe; and a lower funnel, wherein the glass particulates are deposited around the outer circumference of a starting rod supported by the support rod within the reaction vessel by an OVD method, characterized in that an outer atmosphere of the reaction vessel, the upper funnel and the lower funnel contains dusts having a size of 0.3µm or greater at a density of 3.5×10⁴ /m³ or less to manufacture the glass particles deposit.
   More desirably, the lower funnel contains dusts having a size of 0.3µm or greater at a density of 3.5×10⁵ /m³ or less.
(40) An apparatus for manufacturing a glass particles deposit, comprising an upper funnel having an upper lid through which a support rod is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that there is air-tightness between the burner and a burner fitting portion of the reaction vessel.
(41) The apparatus for manufacturing the glass particles deposit according to (40), characterized in that a gap between the burner and the fitting portion of the reaction vessel is sealed with a sealant.
(42) An apparatus for manufacturing a glass particles deposit, comprising an upper funnel having an upper lid through which a support rod is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that the reaction vessel has a side wall integrally formed with the burners.
(43) An apparatus for manufacturing a glass particles deposit, comprising an upper funnel having an upper lid through which a support rod is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that a barrel is equipped having a larger inner diameter than the outer diameter of the burner and air-tightly covering a burner fitting portion of the reaction vessel and a burner portion protruding out of the reaction vessel.
(44) The apparatus for manufacturing the glass particles deposit according to (43), characterized in that the axial length of the barrel is 10mm or greater.
(45) The apparatus for manufacturing the glass particles deposit according to (43) or (44), characterized in that the material of the barrel is quartz.
(46) The apparatus for manufacturing the glass particles deposit according to any one of (43) to (45), characterized in that a gap between the barrel and the burner is air-tightly sealed with an O-ring.
(47) An apparatus for manufacturing a glass particles deposit, comprising an upper funnel having an upper lid through which a support rod is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that a bellows pipe is equipped having a larger inner diameter than the outer diameter of the burner and air-tightly covering a burner fitting portion of the reaction vessel and a burner portion protruding out of the reaction vessel.
(48) Amethod for manufacturing a glass particles deposit, using an apparatus for manufacturing the glass particles deposit, comprising an upper funnel having an upper lid through which a support rod is inserted to be freely lifted, a reaction vessel provided with a burner and an exhaust pipe; and a lower funnel, wherein the glass particulates are deposited around the outer circumference of a starting rod supported by the support rod within the reaction vessel by an OVD method, characterized in that there is air-tightness to have no gap between the burner and a burner fitting portion of the reaction vessel, and the burner position is fixed in a radial direction of the glass particles deposit to manufacture the glass particles deposit.
(49) Amethod formanufacturing a glass particles deposit, using an apparatus formanufacturing the glass particles deposit, comprising an upper funnel having an upper lid through which a support rod is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that a barrel is equipped having a larger inner diameter than the outer diameter of the burner and air-tightly covering a burner fitting portion of the reaction vessel and a burner portion protruding out of the reaction vessel, and the glass particles deposit is produced while the burner is being moved in a radial direction of the glass particles deposit in correspondence to a variation in the outer diameter of the glass particles deposit.
(50) The method for manufacturing the glass particles deposit according to (49) , characterized in that the axial length of the barrel is 10mm or more.
(51) The method for manufacturing the glass particles deposit according to (49) or (50), characterized in that the material of the barrel is quartz.
(52) The method for manufacturing the glass particles deposit according to any one of (49) to (51), characterized in that an O-ring is air-tightly installed between the barrel. and the burner.
(53) Amethod formanufacturing a glassparticles deposit, using an apparatus for manufacturing the glass particles deposit, comprising an upper funnel having an upper lid through which a support rod is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that a bellows pipe is equipped having a larger inner diameter than the outer diameter of the burner and air-tightly covering a burner fitting portion of the reaction vessel and a burner portion protruding out of the reaction vessel, and the glass particles deposit is produced while the burner is being moved in a radial direction of the glass particles deposit in correspondence to a variation in the outer diameter of the glass particles deposit.
(54) An apparatus for manufacturing a glass particles deposit, comprising an upper funnel having an upper lid through which a support rod is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that a gap between the reaction vessel and an exhaust pipe attached to the reaction vessel is sealed with a sealant.
(55) The apparatus for manufacturing the glass particles deposit according to (54), characterized in that the sealant is a glass tape, an aluminum tape, an O-ring, an aluminum plate or an Ni plate.
(56) The apparatus for manufacturing the glass particles deposit according to (54) or (55), characterized in that a difference between the outer diameter of the exhaust pipe and a hole diameter of an exhaust pipe intake is from 2 to 10mm.
(57) The apparatus for manufacturing the glass particles deposit according to any one of (54) to (56), characterized in that the material of the exhaust pipe and the reaction vessel is quartz, Ni or Ni based alloy.
(58) An apparatus for manufacturing a glass particles deposit, comprising an upper funnel having an upper lid through which a support rod is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that the reaction vessel and the exhaust pipe are integrally provided.
(59) Amethod formanufacturing a glassparticles deposit, using an apparatus formanufacturing the glass particles deposit, comprising an upper funnel having an upper lid through which a support rod is inserted to be freely lifted, a reaction vessel provided with a burner and an exhaust pipe, and a lower funnel, wherein the glass particulates are deposited around the outer circumference of a starting rod supported by the support rod within the reaction vessel by an OVD method, characterized in that a gap around an exhaust pipe attached to the reaction vessel is sealed with a sealant to manufacture the glass particles deposit.
(60) The method for manufacturing the glass particles deposit according to (59), characterized in that a gap around the exhaust pipe is sealed with a sealant that is a glass tape, an aluminum tape, an O-ring, an aluminum plate or an Ni plate.
(61) The method for manufacturing the glass particles deposit according to (59) or (60), characterized in that a difference between the outer diameter of the exhaust pipe and a hole diameter of an exhaust pipe intake is from 2 to 10mm.
(62) The method for manufacturing the glass particles deposit according to any one of claims (59) to (61), characterized in that the material of the exhaust pipe and the reaction vessel is quartz, Ni or Ni based alloy to manufacture the glass particles deposit.
(63) Amethod formanufacturing a glassparticles deposit, using an apparatus formanufacturing the glass particles deposit, comprising an upper funnel having an upper.lid through which a support rod is inserted to be freely lifted, a reaction vessel provided with a burner and an exhaust pipe; and a lower funnel, wherein the glass particulates are deposited around the outer circumference of a starting rod supported by the support rod within the reaction vessel by an OVD method, characterized in that the reaction vessel and the exhaust pipe are integrated.
(64) The method for manufacturing the glass particles deposit according to (63), characterized in that the material of the exhaust pipe and the reaction vessel is quartz, Ni or Ni based alloy.

### Brief Description of the Drawings

Fig. 1 is a schematic cross-sectional view typically showing the fundamental constitution of an apparatus for manufacturing a glass particles deposit according to one embodiment of the present invention.
Fig. 2 is a cross-sectional view showing one example of a burner of multi-tube type to be used with the apparatus of the invention.
Fig. 3 is an explanatory view showing an example of how to attach a quartz sleeve for reaction vessel to a reaction vessel.
Fig. 4 is an explanatory view showing an example of how to attach a quartz sleeve for upper funnel to an upper funnel.
Fig. 5 is an explanatory view showing an example of how to attach a quartz sleeve for lower funnel to a lower funnel.
Fig. 6 is a cross-sectional view showing a structure example of an upper lid.
Fig. 7 is a cross-sectional view showing a structure example of the upper lid provided with an outer circumferential wall.
Fig. 8 is a cross-sectional view showing a structure example of the upper lid provided with a bellows pipe.
Fig. 9 is a schematic cross-sectional view typically showing the fundamental constitution of an apparatus for manufacturing the glass particles deposit according to another embodiment of the invention.
Fig. 10 is an explanatory view showing a constitution example of the reaction vessel.
Fig. 11 is an explanatory view showing an example of the structure of an upper quartz disk and a lower quartz disk to be mounted on a starting rod in this invention, and the mounting method.
Fig. 12 is an explanatory view exemplifying a state where a gas inlet tube is attached to an upper funnel and a lower funnel.
Fig. 13 is an explanatory view showing one example of the structure of the upper lid.
Fig. 14 is a schematic cross-sectional view typically showing the fundamental constitution of an apparatus for manufacturing a glass particles deposit according to still another embodiment of the invention.
Fig. 15 is a schematic view, partially in cross-section, for explaining the reaction vessel in which a gap between a burner fitting portion and a burner is air-tightly sealed in this invention, wherein Fig. 15A is a view showing the reaction vessel in which the gap is sealed with a sealant, and Fig. 15B is a view showing the reaction vessel in which the gap is sealed with a metallic plate and a glass tape.
Fig. 16 is a schematic perspective view for explaining a burner integral type reaction vessel for use in this invention, and showing a state before assembling the parts.
Fig. 17 is a schematic view for explaining the reaction vessel in which a movable burner is covered via an O-ring with a barrel in this invention, wherein Fig. 17A is a schematic cross-sectional view and Fig. 17B is a schematic side view.
Fig. 18 is a schematic view for explaining the reaction vessel in which a movable burner is covered with a bellows pipe in this invention, wherein Fig. 18A is a schematic cross-sectional view and Fig. 18B is a schematic side view.

In these figures, reference numeral 1 denotes a reaction vessel, 2 denotes an upper funnel, 3 denotes a lower funnel, 4 denotes a burner, 5 denotes an exhaust pipe, 6 denotes a support rod, 7 denotes a core rod, 8, 9 denote a dummy rod, 10 denotes an apparatus for manufacturing a glass particles deposit, 11 denotes a glass particles deposit, 12 denotes a quartz disk, 13 denotes a quartz disk, 14 denotes an upper lid, 15 denotes a quartz sleeve for reaction vessel, 16 denotes a quartz sleeve for upper funnel, 17 denotes a quartz sleeve for lower funnel, 18 denotes a source and hydrogen gas exhaust port, 19 denotes an argon gas exhaust port, 20 denotes a hydrogen gas exhaust port, 21 denotes an oxygen gas exhaust port, 22 denotes an argon gas exhaust port, 23 denotes an oxygen gas exhaust port, 24 denotes a burner insertion hole, 25 denotes an exhaust pipe insertion hole, 26a, 26b denote a supporting flange, 27 denotes a support rod insertion opening, 28 denotes an outer circumferential wall, 29 denotes a starting rod, 30 denotes a lifting device, 31 denotes a clean gas inlet pipe, 32 denotes a bellows pipe, 33 denotes a clean gas inlet pipe, 10A denotes an apparatus for manufacturing a glass particles deposit, 34 denotes an outer wall, 35 denotes an outer wall, 36 denotes a skeleton portion, 38 denotes an upper lid, 40 denotes amounting hole, 42 denotes a disk, 43 denotes an outer circumferential wall, 48 denotes a disk, 46 denotes a mounting hole, 50 denotes a gas inlet pipe, 52 denotes a gas inlet pipe, 56 denotes a support rod insertion opening, 58 denotes a gas inlet opening, 60, 62 and 63 denote a burner for synthesizing the glass particulates, 65, 66 and 67 denote a burner fitting portion, 65', 66' and 67' denote a clearance, 68, 69 and 70 denote a gas line, 72 denotes an exhaust opening, 73 denotes a pressure gauge, 74 denotes a fan, 76, 77a and 77b denote a sealant, 1A denotes a burner integral type reaction vessel, 80 denotes a slide device, 82, 83 and 84 denote a barrel, 90 denotes a starting rod, 94, 95 and 96 denote an O-ring, and 101, 102 and 103 denote a bellows pipe.

### Best Mode for Carrying Out the Invention

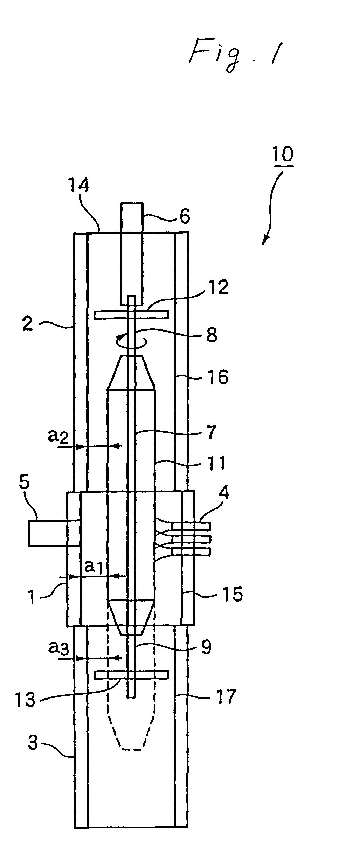

The preferred embodiments of the present invention will be described below with reference to the accompanying drawings. Fig. 1 is a schematic cross-sectional view typically showing the fundamental constitution of an apparatus for manufacturing a glass particles deposit according to this invention. The apparatus for manufacturing the glass particles deposit as shown in Fig. 1 is composed of a reaction vessel provided with a burner 4 and an exhaust pipe 5, an upper funnel 2 having an upper lid 14 for taking in or out a glass particles deposit 11 on the upper portion, and a lower funnel 3.

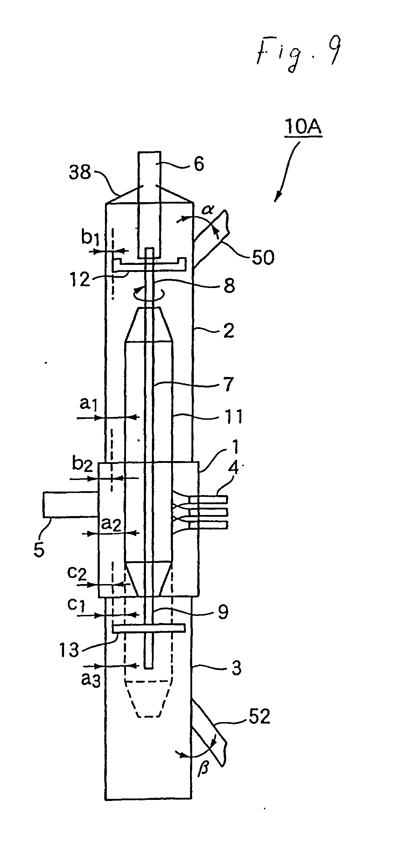

A fundamental operation for manufacturing the glass particles deposit with the apparatus of the invention is as follows. A starting rod (e.g., a core rod 7 consisting of a core and a clad having an upper dummy rod 8 and a lower dummy rod 9 connected on the upper and lower sides) carried by the support rod 6 is inserted into the glass particles deposit manufacturing apparatus 10. This starting rod is reciprocated up and down by the lifting device (see Figs. 7 and 8) connected to an upper portion of the support rod 6, while being rotated around the axis, so that the glass particulates synthesized by the burner are deposited around the outer circumference of the starting rod to produce the glass particles deposit 11.

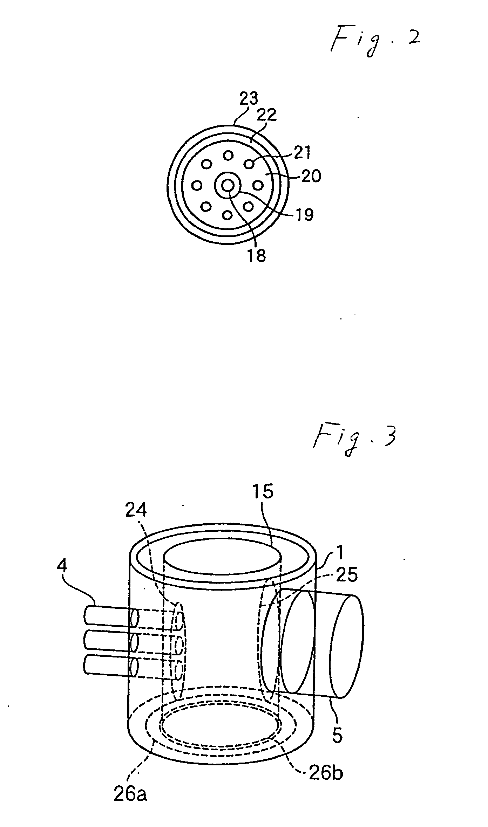

The burner 4 provided in the reaction vessel 1 for the apparatus of the invention may be of the type as conventionally employed, and preferably a multi-tube type burner as shown in Fig. 2. In Fig. 2, reference numeral 18 denotes a source and hydrogen gas exhaust port, 19 and 22 denote an argon gas exhaust port, 20 denotes a hydrogen gas exhaust port, and 21 and 23 denote an oxygen gas exhaust port.

The features of this invention will be listed below.

(1) In order to make a source of metallic dusts (Ni, Cr, Fe, Al) causing a fiber disconnection as least as possible, a quartz sleeve 15 having a hole capable of inserting the burner 4 and the exhaust pipe 5 is placed inside the metallic reaction vessel 1. Moreover, it is desirable that the quartz sleeves 16 and 17 are placed inside the upper funnel 2 and the lower funnel 3.

When the entire apparatus is made of quartz, there is a problem that heat is likely to leak to the outside, with bad operability. Also, there is another problem that quartz is difficult to be applied to a mechanical portion. However, if the quartz sleeve is placed, it is possible to remove the influence of the material.

From the point of view to improve the exhaust efficiency, it is preferable to make the quartz sleeves 15, 16 and 17 cylindrical, and set a difference (double a₁, a₂ and a₃ in Fig. 1) between the inner diameter of each quartz sleeve and the maximum outer diameter of glass particles deposit 11 to be 100mm or less. The lower limit of the difference between the inner diameter of each quartz sleeve 15, 16, 17 and the maximum outer diameter of glass particles deposit 11 is usually about 10mm in consideration of a whirling of a rotating member containing the starting rod and the glass particles deposit.

When the glass particles deposit is produced using the apparatus with the quartz sleeves 15, 16 and 17 placed, the quartz disks 12 and 13 moving with the starting rod are placed in an upper dummy rod 8 above an effective portion of the starting rod and a lower dummy rod 9 below the effective portion to narrow a space around the glass particles deposit 11, as shown in Fig. 1, whereby the exhaust efficiency is further improved.

The shape of the quartz sleeves 15, 16 and 17 and their attached state are shown in Figs. 3 to 5, respectively. Fig. 3 is an example of mounting a quartz sleeve for reaction vessel 15 to the reaction vessel 1, in which the quartz sleeve for reaction vessel 15 provided with the burner insertion holes 24 for inserting the burners and an exhaust pipe insertion hole 25 for inserting the exhaust pipe 5 is inserted into the reaction vessel 1 and held by a supporting flange 26a (on the quartz sleeve side) and a supporting flange 26b (on the reaction vessel side).

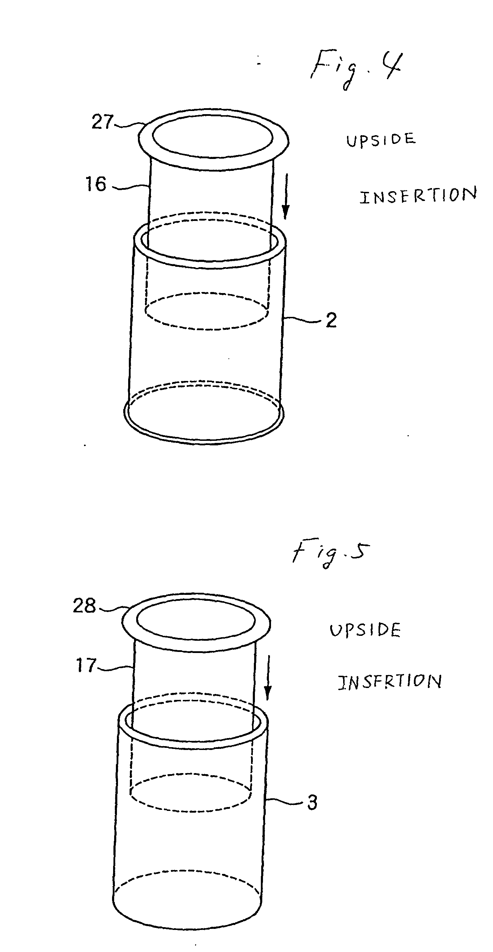

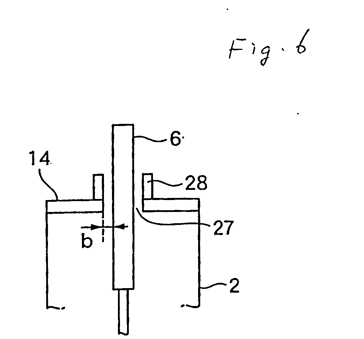

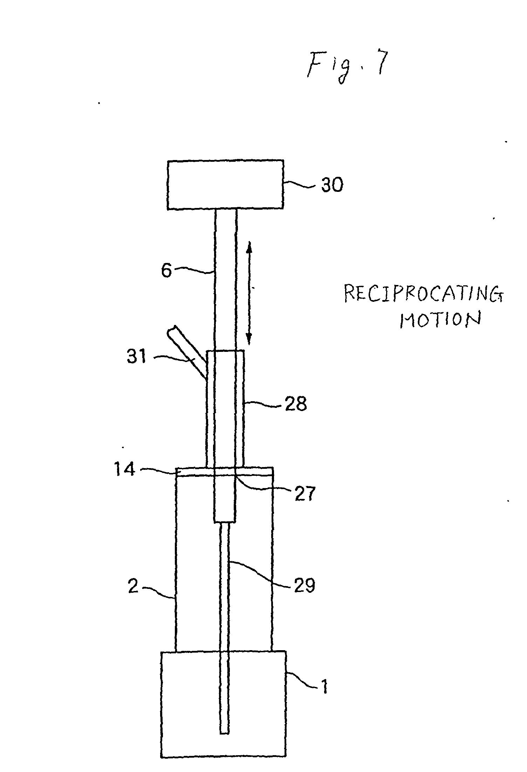

Figs. 4 and 5 are examples of mounting the quartz sleeve to the upper funnel 2 and the lower funnel 3, in which.a quartz sleeve for upper funnel 16 with a flange 27 and a quartz sleeve for lower funnel 17 with a flange 28 are inserted and held with the flange.

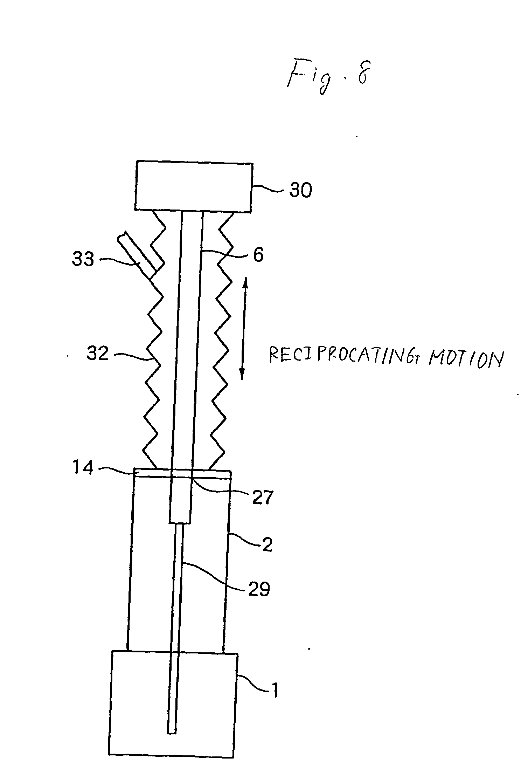

(2) Though the upper lid 14 is provided with a support rod insertion opening 27 for inserting the support rod 6 centrally, as shown in Fig. 6, an outside air containing dust may flow in through a gap between the insertion opening 27 and the support rod 6 to cause the foreign mater to adhere to the glass particles deposit 11. To prevent the dust from flowing in through this support rod insertion opening 27, a difference (double b in Fig. 2) between the inner diameter of the support rod insertion opening 27 and the outer diameter of the support rod 6 is preferably 10mm or less, and an outer circumferential wall 28 having a height of 5mm or more is placed around the outer circumference of the support rod insertion opening 27 to enclose the support rod 6 and suppress the entrainment of the outside air, as shown in Fig. 6. The material of the upper lid 14 is quartz or Ni.

Further, to enhance the effect of suppressing the outside air from being mixed, it is preferable that a clean gas inlet tube 31 is placed on an outer circumferential wall 28 to introduce a clean gas between the support rod 6 and the outer circumferential wall 28, as shown in Fig. 7. The clean gas may be a clean or nitrogen gas having dusts having a size of 0.3µm or more at a density of 3.5×10⁴/m³ or less. In Fig. 7, 29 denotes the starting rod, and 30 denotes the lifting device for reciprocating the support rod 6 connected to the starting rod up and down while rotating the support rod 6 axially.

(3) A bellows pipe 32 expandable upon a reciprocating up and down motion of the support rod 6 and linking the upper lid 6 and the lifting device 30 in a form of covering the support rod 6 is placed to prevent entrainment of the outside air from the support rod insertion opening 27, as shown in Fig. 8.

Moreover, to enhance the effect of suppressing the outside air from being mixed, a clean gas inlet pipe 33 may be attached to the bellows pipe 32 to introduce a clean gas such as clean or nitrogen gas having dusts having a size of 0.3µm or more at a density of 3.5×10⁴/m³ or less.

Fig. 9 is a schematic cross-sectional view typically showing the fundamental constitution of the glass particles deposit manufacturing apparatus that carries out another method of the invention. In Fig. 9, the same or like parts are designated by the same numerals as in Fig. 1. The glass particles deposit manufacturing apparatus 10A as shown in Fig. 9 comprises the reaction vessel 1 provided with the burners 4 and the exhaust pipe 5, the upper funnel 2 having the upper lid 8 for taking in or out the glass particles deposit 11 on the upper portion, and the lower funnel 3.

This method of the invention fundamentally involves placing the burners 4 supported by the support.rod 6 within this manufacturing apparatus 10A, and opposed to a revolving starting rod (e.g., one having the upper dummy rod 8 and the lower dummy rod 9 connected at both ends of the core rod 7 composed of core and clad) , and depositing the glass particulates around the outer circumference of the starting rod, while reciprocating the starting rod up and down, to manufacture the glass particles deposit 11.

The burner 4 is preferably a burner of multi-tube type as shown in Fig. 2.

The features of this invention will be listed below.

(1) In order to reduce the amount of foreign matter arising from the reaction vessel 1, the upper funnel 2 and the lower funnel 3, and to efficiently exhaust the glass particulates or dust floating within the manufacturing apparatus 10A (hereinafter referred to as the floating dust), the manufacturing apparatus 10A is designed to be as compact as possible, so that a difference between the inner diameter of the upper funnel 2, the reaction vessel 1 and the lower funnel 3 and the maximum outer diameter of the glass particles deposit 11 is 100mm or less. The lower limit value of the difference between the inner diameter of the reaction vessel 1 and the maximum outer diameter of the glass particles deposit 11 is appropriately set so that the glass particles deposit 11 may not contact with the wall face of the reaction vessel. 1 or the burners 4 during the manufacturing process, and is usually about 10mm.

(2) In order to make a source of metallic dusts (Ni, Cr, Fe, Al) causing a fiber disconnection or increased transmission loss as least as possible, most (50% or more) of the reaction vessel 1 is made of quartz, except for the skeleton portion. Also, most (50% or more) of the upper funnel 2 and the lower funnel 3 are preferably made of quartz, except for the upper lid 38 having the mechanical portion. The skeleton portion and the upper lid are made of Ni or Ni based alloy.

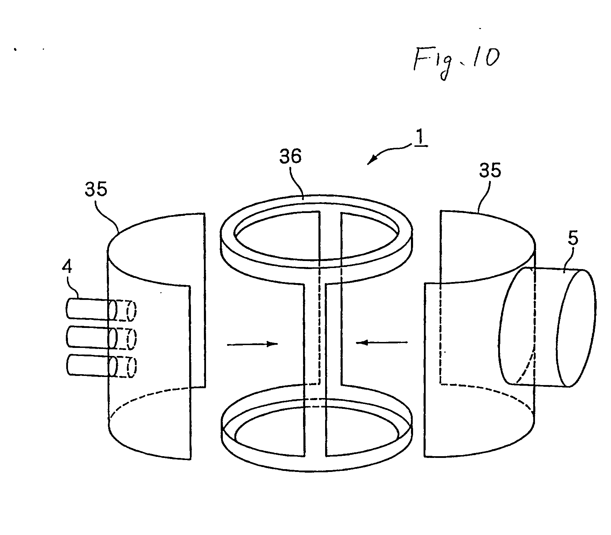

Fig. 10 shows a constitution example of the reaction vessel 1. The reaction vessel 1 of this example consists of a skeleton portion 36 made of Ni, an outer wall 34 made of quartz with the glass particulate synthesizing burners 4 installed and an outer wall 35 with the exhaust pipe 5 mounted.

(3) To enhance the exhaust efficiency of glass particulates or other dusts floating in the space within the manufacturing apparatus 10A, it is preferable that the quartz disks 12 and 13 are mounted above and/or below the effective portion of the starting rod, and moved up and down along with the starting rod (i.e., glass particles deposit 11). Thereby, the space around the glass particles deposit 11 is made narrower to enhance the exhaust efficiency.

In this case, the differences between the inner diameter of the upper funnel 2 and the reaction vessel 1 and the outer diameter of the upper quartz disk 12 (double b₁ and b₂ in Fig. 9) and the differences between the inner diameter of the lower funnel 3 and the reaction vessel 1 and the outer diameter of the lower quartz disk 13 (double c₁ and c₂ in Fig. 9) arepreferably 50mm or less.

The atmosphere pressure above or below the disk can be held at high value to prevent entrainment of the outside air from the upper or lower portion, if the reaction vessel, the upper funnel or the lower funnel is made cylindrical, and a difference between the inner diameter of the reaction vessel, the upper funnel or the lower funnel and the outer diameter of the disk is 100mm or less. Also, if the difference is made 100mm or less, the exhaust volume can be reduced to exhaust glass particulates floating within the reaction vessel efficiently.

More desirably, the difference between the inner diameter of the reaction vessel, the upper funnel or the lower funnel and the outer diameter of the disk is 50mm or less. With the difference of 50mm or less, the above effect is further enhanced.

The structure of the upper quartz disk 12 and the lower quartz disk 13 and a mounting method are exemplified in Figs. 1A and 1B. In this example, the upper quartz disk 12 is a disk 42 having a mounting hole 40 in the center, which is formed with an outer circumferential wall 43 around it to form a pan for accepting a falling substance from the above. Also, the lower quartz disk 13 is composed of a disk 48 having a mounting hole 46 in the center.

The upper quartz disk 12 and the lower quartz disk 13 are mounted on the starting rod by inserting the upper dummy rod 8 and the lower dummy rod 9 connected to the core rod 7 through the mounting holes 40 and 46 respectively. The dummy rod 8, 9 is composed of a smaller diameter portion having an outer diameter to be fitted into the mounting hole 40, 46 of the quartz disk 12, 13 and a larger diameter portion having a larger outer diameter.

(4) To exhaust floating dusts within the manufacturing apparatus 10A, it is preferred that a clean gas of air or nitrogen containing dusts having a size of 0.3µm or greater at a density of 3.5×10⁴ /m³ or less is introduced at a flow rate of one liter/min or more into the upper funnel 2 and/or the lower funnel 3.

To effectively direct a flow of gas within the manufacturing apparatus 10A to the exhaust pipe 5, a gas inlet tube 50 for introducing the clean gas into the upper funnel 2 and a gas inlet tube 52 for introducing the clean gas into the lower funnel 3 are preferably inclined to introduce the clean gas toward the reaction vessel 1 so that the angles (α and β in Fig. 9) of the gas inlet tubes to the central axis of the upper and lower funnels are less than 90°. Figs. 12A and 12B show one example of the states of mounting the gas inlet tubes 50 and 52.

(5) An insertion opening for inserting the support rod 6 to suspend the starting rod is provided in the center of the upper lid 38, but to prevent the outside air containing many dusts from flowing into the manufacturing apparatus 10A, a clearance between the support rod insertion opening and the support rod 6 (a difference between the inner diameter of the insertion opening and the outer diameter of the support rod) is preferably 40mm or less. More preferably, it is 10mm or less. With 40mm or less, entrainment of the outside air is prevented. It is possible to prevent entrainment of the outside air by the clean gas from the upper and lower portions more effectively.

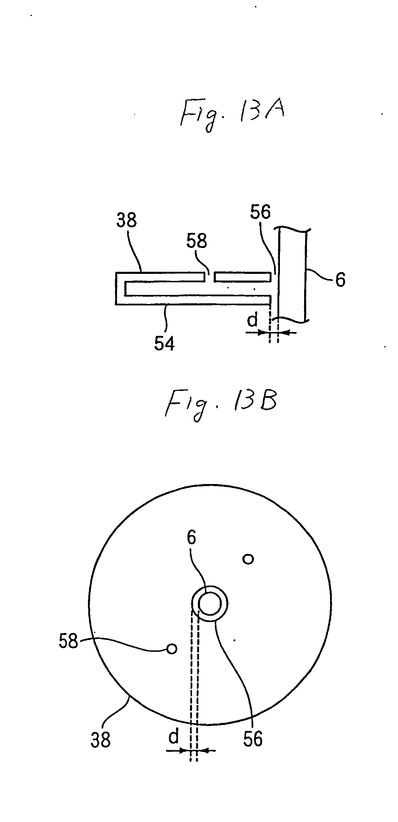

Also, the upper lid 38 has a dual structure without irregularities on an inner surface 54, as exemplified in Fig. 13. That is, the upper lid 38 has preferably a planar structure without concave or step portions having a depth of about 1mm or more where floating glass particulates are likely to deposit. Figs. 13A and 13B are cross-sectional views of the upper lid, as seen from the transverse direction and the upper direction, respectively. In an example of Fig. 13, a support rod insertion opening 56 for inserting the support rod 6 is provided in the center, with a clearance d between the upper lid 38 and the support rod 6 being 5mm or less.

Moreover, it is preferable to introduce a clean gas composed of the air or nitrogen containing. dusts having a size of 0.3µm or greater at a density of 3.5×10⁴ /m³ or less from the gas inlet opening 58 provided in the upper lid 38 into an internal space of dual structure, and blow the clean gas through a gap on the support rod into a clearance portion between the upper lid 38 and the support rod 6 at a flow rate of one liter/min or more. With the density of 3.5×10⁵ /m³ or less, the cleanness inside the apparatus can be maintained, irrespective of the entrainment of the outside air into the apparatus. Also, with the density of 3.5×10⁴ /m³ or less, the cleanness can be enhanced.

(6) To improve the exhaust efficiency of floating dusts, the exhaust pipe 5 is preferably placed so that the central position of the exhaust pipe 5 may be above the intermediate position of the burner 4 (between the uppermost burner and the lowermost burner) for synthesizing glass particulates. This is to efficiently exhaust the floating dusts flowing upward owing to the hot air.

(7) Since the entrainment of the outside air into the apparatus can not be fully prevented, the atmosphere around the reaction vessel 1, the upper funnel 2 and the lower funnel 3 (e.g., within a circle having a radius of about 5m at maximum around the rotation axis of the starting rod) is desirably kept to contain the dusts having a size of 0.3µm or greater at a density of 3.5×10⁴ /m³ or less.

As a result of researching a method for reducing the foreign matter to be mixed into the glass particles deposit produced by the OVD method, the present inventors noticed that no consideration was taken for the structure of the burner fitting portion between the reaction vessel and the burner, and made some attempts to shut off the entrainment of the air from the clearance portion, which was normally as large as 2 to 10mm in the fitting portion of the burner into the reaction vessel. As a result, the present inventors found that this method was very effective to reduce the foreign matter to be mixed, with the effect of increasing the deposition rate of glass particles deposit, and attained this invention.

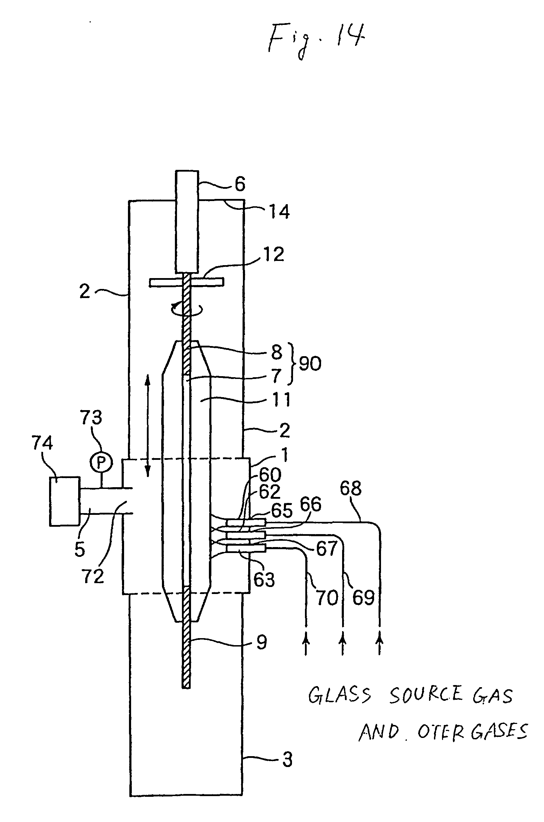

In Figs. 14 to 18, the same or like parts are designated by the same numerals as for the glass particles deposit of Fig. 1.

(1) When the relative movement between the burner and the starting rod (having the glass rod composed of at least core or the core and clad) takes place only in the substantially vertical direction, namely, the glass particles deposit is formed without moving the burner relative to the starting rod in a diametric (horizontal) direction of the starting rod and the glass particles deposit, the starting rod is reciprocated in the vertical direction, providing air tightness between the burner and the reaction vessel without any means in the gap (clearance) between the burner fitting portion (hole) of the reaction vessel and the outer circumference of the burner, thereby depositing the glass particulates without entrainment of the outside air.

Fig. 14 is a schematic explanatory view showing another embodiment of the invention. The upper funnel 2 and the lower funnel 3 (closed pipe) internally communicating to the reaction vessel are provided above and under the reaction vessel 1, the upper lid 14 having a hole for inserting the support rod 6 is put over the upper funnel 2, thereby making it possible to bring a starting rod 90 consisting of the dummy rods 8 and 9 connected to both ends of the core rod 7 having the core or the core and clad, or the parent material having the glass particles deposit formed around the starting rod 90 into or out of the reaction vessel. Also, the upper dummy rod 8 has the quartz disk 12 mounted to isolate the heat and shut off the foreign matter from falling through the mounting hole of the support rod 6 on the upper lid. The reaction vessel has the burners 60, 62 and 63 mounted via the burner fitting portions (holes) 65, 66 and 67 of the reaction vessel 1 so that the top end of each burner blows out the glass particulates within the reaction vessel to form the glass particles deposit 11 around the starting rod 90. 68, 69 and 70 typically denote the gas line supplied to the respective burners 60, 62 and 63. Also, the reaction vessel 1 is provided with the exhaust opening 72 to exhaust undeposited, excess glass particulates with the exhaust gas. 5 denotes the exhaust pipe, 73 denotes a pressure gauge, and 74 denotes exhausting means. The arrow indicates the movement direction.

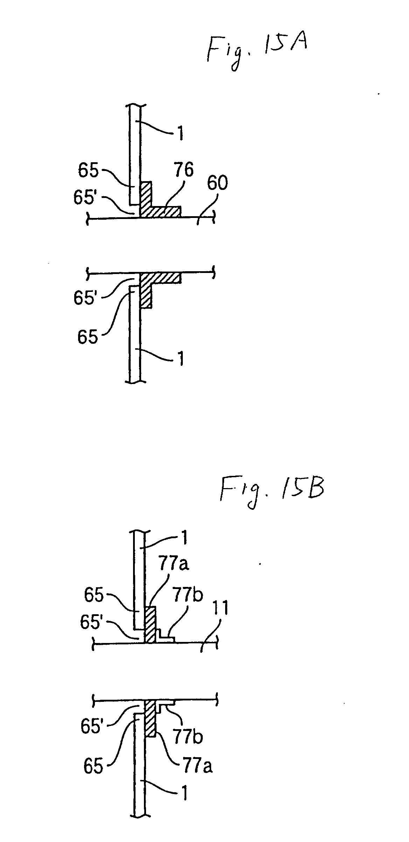

In this invention, the clearance 65', 66' and 67' between the burner 60, 62 and 63 and the burner fitting portion (hole) 65, 66 and 67 is sealed with a sealant 76 such as a glass tape; an aluminum tape, an aluminum plate or an Ni plate, as shown in Fig. 15A. Thereby, the burners 60, 62 and 63 are tightly fixed to the reaction vessel 1. The seal with the glass tape is preferable in respect of producing no metal dusts.

Also, it is preferable to fix the burners with a metal plate 77a and a sealing tape 77b, as shown in Fig. 2B.

The material of the reaction vessel and burners may be quartz, Ni, or Ni based alloy, for example.

As means for tightly fixing the burner to the reaction vessel, the burner may be preferably integrated with a part of the reaction vessel. Though there is the possibility of producing the dust frommetal by making the seal with an aluminum plate or Ni plate, this phenomenon can be prevented by integrally forming the burner with the reaction vessel.

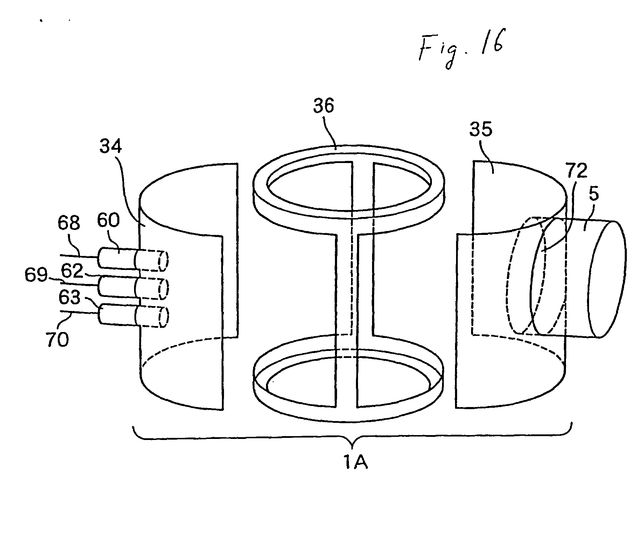

Fig. 16 is a schematic perspective view for explaining one embodiment of a burner integral type reaction vessel 1A, comprising a burner integral type outside wall 34 formed integrally with the burners 60, 62 and 63, and an exhaust pipe integral type outside wall 35 formed integrally with the exhaust opening 72 (or exhaust pipe 5), the outside walls being tightly attached to the skeleton portion 36. Thus, the glass particles deposit is formed using other parts that are the same as in Fig. 1.

The material of the reaction vessel and the burners in this burner integral type reaction vessel may be also quartz, Ni or Ni based alloy in the same manner as the reaction vessel of fixed type.

By the way, one means for the OVD method involves depositing the glass particulates while moving the burners in the diametric direction of the glass particles deposit to adjust the distance between the deposition plane and the exhaust nozzle of burner in accordance with the greater outer diameter of the glass particles deposit. With this means, since the burners can not be fixed to the reaction vessel, unlike the above (1), (2) means for enclosing the burner fitting portion of the reaction vessel and a portion of the burner protruding from the reaction vessel with another pipe or expandable bellows pipe is employed.

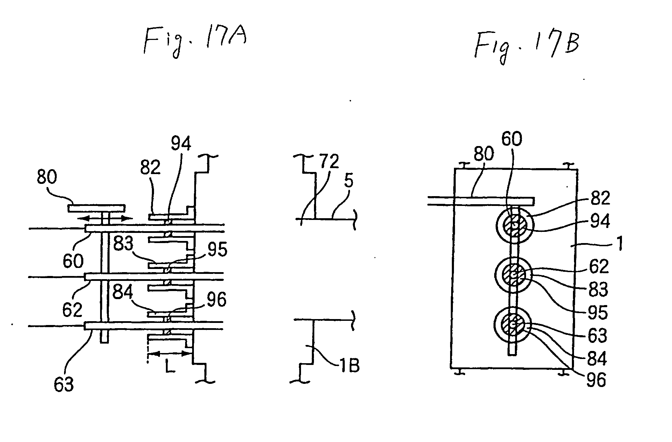

Fig. 17 is a partial explanatory view showing one embodiment of the reaction vessel of barrel enclosing type according to this invention, in which Fig. 17A is a schematic cross-sectional view and Fig. 17B is a partial side view. Each burner 60, 62 and 63 is movable in the diametric direction of the starting rod and the glass particulate deposit by a slide device 80. The barrels 82, 83 and 84 are provided to cover the outer periphery of burners 60, 62 and 63, the end portion of the barrels 82, 83 and 84 being closely contacted with the outside wall of the reaction vessel 1B.

The experiments revealed that the outside air is unlikely to be mixed if the length L of each barrel 82, 83 and 84 is made 10mm or more. Below 10mm, this effect is difficult to obtain. The upper limit value of the length is not specifically limited, but may be satisfied with about 500mm in consideration of the size and cost of the installation or burners. Preferably, it is about 200 to 300mm.

If the material of barrel is quartz, it is possible to prevent the dust (metallic foreign matter) being produced from the barrel. If an O-ring 94, 95, 96 is placed between the barrels 82, 83 and 84 and the burners 60, 62 and 63, as shown in Fig. 17, the outside air is further unlikely to be mixed. Also, if a gel-like clearance filler is applied between the O-rings 94, 95 and 96 and the burners 60, 62 and 63 and between the O-rings 94, 95 and 96 and the barrels 82, 83 and 84, the air tightness is further improved.

The material of the reaction vessel and the burners is preferably quartz, Ni or Ni based alloy.

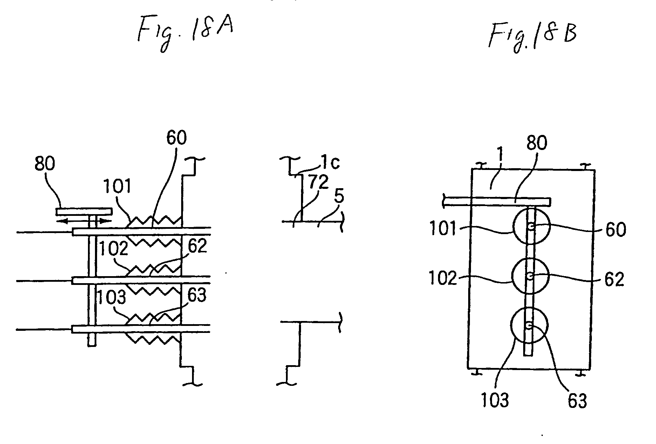

Fig. 18 is a partial explanatory view showing one embodiment of the reaction vessel of bellows pipe enclosing type according to this invention, in which Fig. 18A is a schematic cross-sectional view and Fig. 18B is a partial side view. Each burner 60, 62 and 63 is movable in the diametric direction of the starting rod and the glass particles deposit by the slide device 80. The bellows pipe 101, 102 and 103 are provided to cover the outer periphery of burners 60, 62 and 63, the end portion of the bellows pipe 101, 102 and 103 being closely contacted with the outside wall of the reaction vessel 1C. In the case of bellows pipe, the clearance around the burner can be tightly closed. The expandable bellows pipe may be made of a heat resistant material such as Teflon resin or glass fiber.

The material of the reaction vessel and the burners is preferably quartz, Ni or Ni based alloy.

By the way, it has been found that when the burners are tightly fixed to the reaction vessel in this invention, the glass deposition rate is higher than when the burners are moved. When the glass particles deposit of the same size is produced under the same conditions except for the movement of the burners, the deposition rate when the burners are fixed is about 20% higher than when the burners are moved. Its reason is as follows.

When a deposition target portion is slender at the early stage of depositing the glass particulates, the flame temperature on the deposition plane is decreased, with a smaller bulk density of deposited glass, so that the glass particles deposit is thickened at the earlier time, if the burner is far away from the starting glass rod. This target thickening effect increases the initial yield. On the other hand, if the glass particles deposit is thickened to some extent, the flame temperature on the depositionplane rises as the distance between the burner and the glass rod is closer, so that the glass deposition yield is increased due to thermo-phoresis effect.

In the above embodiments of the invention, the air tightness is provided between the reaction vessel and the burners. Likewise, the air tightness may be provided between the reaction vessel and the exhaust pipe.

More specifically, the exhaust pipe 5 is employed by inserting it through an exhaust pipe mounting hole of the reaction vessel 1, but if the clearance portion of the exhaust pipe mounting hole is closed with a sealant such as glass tape, aluminum tape, aluminum plate, Ni plate, or O-ring, the outside air is prevented from being mixed into the reaction vessel, whereby the foreign matter in the glass particles deposit can be reduced, as shown in Fig. 15. The clearance between the exhaust pipe and the reaction vessel is preferably from 2 to 10mm in the outer diameter difference. For the clearance exceeding this range, the use amount of sealant is increased, so that the dusts produced from the sealant are not negligible.

Moreover, employing the reaction vessel in which the exhaust pipe 5 and the reaction vessel 1 are integrated, the dusts from the glass tape, aluminum tape, aluminum plate or Ni plate can be prevented favorably. The material of the integral type reaction vessel is preferably quartz, Ni, or Ni based alloy, which is difficult to produce dusts.

### Examples

Amethod of this invention will be specifically described below using the examples, but this invention is not limited to those examples.

### Example 1

Employing a glass particles deposit manufacturing apparatus 10 consisting of a combination of a reaction vessel 1 (inner diameter: 310mm) made of Ni and a reaction vessel quartz sleeve 15 (inner diameter: 250mm) as shown in Fig. 3, an upper funnel 2 (inner diameter: 300mm) made of Ni and an upper funnel quartz sleeve 16 (inner diameter: 240mm) as shown in Fig. 4, a lower funnel 3 (inner diameter: 300mm) made of Ni and a lower funnel quartz sleeve 17 (inner diameter: 240mm) as shown in Fig. 5, like the glass particles deposit manufacturing apparatus as shown in Fig. 1, the glass particulates were deposited around a starting rod.

An upper lid 14 had a structure as shown in Figs. 6 and 7, in which a support rod insertion opening 27 (inner diameter: 55mm) for inserting a support rod 6 (outer diameter: 50mm) is provided in the center, and an outer circumferential wall 28 made of quartz and having a height of 1000mm, which is provided with a clean gas inlet tube 31, is installed around the support rod insertion opening 27 to encircle the support rod 6.

During the depositing operation of glass particulates, a clean gas having dusts having a size of 0.3µm or more at a density of 1.75×10³/m³ or less was introduced through the clean gas inlet tube 31 into the clearance between the support rod 6 and the outer.circumferential wall 28 at a flow rate of 5000 liters/min. The number of dusts having a size of 0.3µm or more in the atmosphere outside the reaction vessel 1, the upper funnel 2 and the lower funnel 3 during the operation was a density of 3.5×10⁶/m³ or less.

Employing a core rod 7 (length: 500mm) with a diameter of 30mm having a core/clad portion, a starting rod was produced by welding an upper dummy rod 8 made of quartz glass at one end, and a lower dummy rod 9 made quartz glass at the other end. In this example, a quartz disk 12 and a quartz disk 13 were not attached.

The staring rod was vertically placed, and traversed up and down by 1100mm at a rate of 200mm/min to deposit glass particulates from the burners 4 for synthesizing glass particulates, while being rotated at 40rpm, so that a glass particles deposit 11 was produced.

Three burners 4 having a diameter of 30mm with the structure as shown in Fig. 2 were installed at an interval of 150mm. Silicon tetrachloride: 4SLM (standard liters/min) as the source material, hydrogen: 80SLM for forming a flame, oxygen: 40SLM, and Ar: 2SLM as the seal gas were supplied to the three burners 4.

To make a glass layer with a thickness of 30mm (93mm in glass diameter, 33mm in core rod diameter) as the final target, the above operation was repeated to produce the glass particles deposit 11 having an outer diameter of 200mm. The produced glass particles deposit 11 was heated to high temperatures, vitrified, and fiberized. As a result, a variation (greater than +0.7µm with respect to the central value 125) in the outer diameter of the fiber due to the foreign matter occurred twice for 200km. In an ensuing screening test, the number of disconnection was once for 100km. Herein, the screening test was a fiber strength test for examining whether or not there is disconnection by applying a load (about 1.8 to 2.2kgf) having an elongation percentage of 2% in a longitudinal direction of the fiber.

### Example 2

Employing a glass particles deposit manufacturing apparatus 10 consisting of a combination of the reaction vessel 1 (inner diameter: 310mm) made of Ni and the reaction vessel quartz sleeve 15 (inner diameter: 250mm) as shown in Fig. 3, the upper funnel 2 (inner diameter: 300mm) made of Ni and the upper funnel quartz sleeve 16 (inner diameter: 240mm) as shown in Fig. 4, the lower funnel 3 (inner diameter: 300mm) made of Ni and the lower funnel quartz sleeve 17 (inner diameter: 240mm) as shown in Fig. 5, like the glass particles deposit manufacturing apparatus as shown in Fig. 1, the glass particulates were deposited around a starting rod.

The support rod insertion opening 27 (inner diameter: 55mm) for inserting the support rod 6 (outer diameter: 50mm) is provided, and above the upper lid 14, the bellows pipe 32 expandable in accordance with a vertical reciprocating motion of the support rod 6 and linking the upper lid 14 and the lifting device 30 to cover the support rod 6 was installed, as shown in Fig. 8.

During the depositing operation of glass particulates, a clean gas having dusts having a size of 0.3µm or more at a density of 1.75×10³/m³ or less was introduced through the clean gas inlet tube 33 provided in the bellows pipe 32 into the bellows pipe 32 at a flow rate of 5000 liters/min. The number of dusts having a size of 0.3µm or more in the atmosphere outside the reaction vessel 1, the upper funnel 2 and the lower funnel 3 during the operation was a density of 3.5×10⁴/m³ or less.

Employing a core rod 7 (length: 500mm) with a diameter of 30mm having a core/clad portion, a starting rod was produced by welding an upper dummy rod 8 made of quartz glass at one end, and a lower dummy rod 9 made quartz glass at the other end. In this example, the quartz disk 12 and the quartz disk 13 were not attached.

To make a glass layer with a thickness of 30mm (93mm in glass diameter, 33mm in core rod diameter) as the final target, the depositing operation was repeated under the exactly same depositing conditions as in the example 1 to produce the glass particles deposit 11 having an outer diameter of 200mm. The produced glass particles deposit 11 was heated to high temperatures, vitrified, and fiberized. As a result, a variation (greater than +0.7µm with respect to the central value 125) in the outer diameter of the fiber due to the foreign matter occurred once for 200km. In an ensuing screening test, the number of disconnection was zero for 100km.

### Example 3

Employing a glass particles deposit manufacturing apparatus 10A consisting of the reaction vessel 1 (inner diameter: 260mm) made of quartz except for a skeleton portion 36 made of Ni as shown in Fig. 10 and the upper funnel 2 and the lower funnel 3 (inner diameter: 250mm) made of quartz and having the shape as shown in Fig. 12, like the glass particles deposit manufacturing apparatus as shown in Fig. 9, the glass particulates were deposited. A planar upper lid 38 made of Ni without irregularities on an inner face 54 was placed over the upper funnel 2, the upper lid 38 having a structure with a support rod insertion opening 56 (inner diameter: 55mm) for inserting the support rod 6 (outer diameter: 50mm) as shown in Fig. 13. The exhaust pipe 5 was installed 50mm above the central position (i.e., intermediate burner position) of three burners 4.

During the depositing operation of glass particulates, a nitrogen gas having dusts having a size of 0.3µm or more at a density of 3.5×10³/m³ or less was introduced through the gas inlet tube 58 of the upper lid 38 and blown into the clearance portion between the support rod 6 and the support rod insertion opening 56 of the upper lid 38 at a flow rate of 20 liters/min. No clean gas was introduced into the upper funnel 2 and the lower funnel 3. The number of dusts having a size of 0.3µm or more in the atmosphere outside the reaction vessel 1, the upper funnel 2 and the lower funnel 3 during the operation was a density of 17.5×10³/m³ or less.

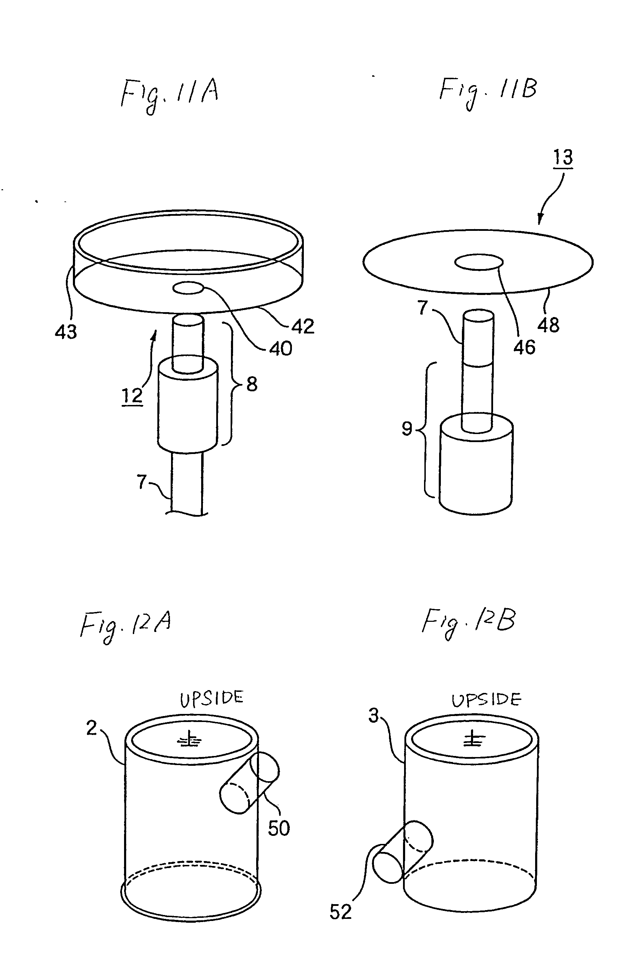

Employing a core rod 7 (length: 500mm) with a diameter of 30mm having a core/clad portion, a starting rod was produced by welding an upper dummy rod 8 (outer diameter of thicker portion: 35mm) made of quartz glass at one end, and a lower dummy rod 9 (outer diameter of thicker portion: 40mm) made of quartz glass at the other end, as shown in Fig. 11. A quartz disk 12 having an outer circumferential wall 43 was attached to the upper dummy rod 8 and a quartz disk 13 was attached to the lower dummy rod 9.

The quartz disk 12 was composed of a disk 42 having an outer diameter of 230mm, with a mounting hole 40 having a diameter of 31mm, and an outer circumferential wall 43 having a height of 100mm stood around the disk 42. The quartz disk 13 was a disk 48 having an outer diameter of 230mm, with a mounting hole 29 having a diameter of 36mm.

The staring rod was vertically placed, and traversed up and down by 1100mm at a rate of 200mm/min to deposit glass particulates from the burners 4 for synthesizing glass particulates, while being rotated at 40rpm, so that a glass particles deposit 11 was produced.

Three burners 4 having a diameter of 30mmwith the structure as shown in Fig. 2 were installed at an interval of 150mm. Silicon tetrachloride: 4SLM (standard liters/min) as the source material, hydrogen: 80SLM for forming a flame, oxygen: 40SLM, and Ar: 2SLM as the seal gas were supplied to the three burners 4.

To make a glass layer with a thickness of 30mm (90mm in glass diameter) as the final target, the above operation was repeated to produce the glass particles deposit 11 having an outer diameter of 200mm. The produced glass particles deposit 11 was heated to high temperatures, vitrified, and fiberized. As a result, a variation (greater than +0.7µm with respect to the central value 125) in the outer diameter of the fiber due to the foreignmatter occurred four times for 200km. In an ensuing screening test, the number of disconnection was three times for 100km. Herein, the screening test was a fiber strength test for examining whether or not there is disconnection by applying a load (about 1.8 to 2.2kgf) having an elongation percentage of 2% in a longitudinal direction of the fiber.

### Example 4

In the apparatus as employed in the example 3, the exhaust pipe 5 was installed 50mm under the central position of three burners 4. The number of dusts having a size of 0.3µm or more in the atmosphere outside the reaction vessel 1, the upper funnel 2 and the lower funnel 3 was a density of 17.5×10³/m³ or less.

Employing this apparatus, a glass particles deposit 11 was produced around the same starting rod and under the same sooting conditions as in the example 3. The parent material obtained by vitrifying the glass particles deposit 11 was fiberized. As a result, a variation in the outer diameter of the fiber due to the foreign matter occurred five times for 200km. In an ensuing screening test, the number of disconnection was five times for 100km.

### Example 5

In the apparatus as employed in the example 3, the gas inlet pipes 50 (mounting angle α=45°) and 52 (mounting angle β=45°) were used to introduce a clean air containing dusts having a size of 0. 3µm or more at a density of 3.5×10³/m³ to 7.0×10³/m³ into the upper funnel 2 and the lower funnel 3 at a flow rate of 10 liters/min.
Employing this apparatus, a glass particles deposit 11 having an outer diameter of 200mm was produced with the same apparatus specifications and under the same conditions as in the example 3. The produced glass particles deposit 11 was heated to high temperatures, vitrified, and fiberized. As a result, a variation (greater than +0.7µm with respect to the central value 125) in the outer diameter of the fiber due to the foreign matter occurred once for 200km. In an ensuing screening test, the number of disconnection was zero for 100km.

### Example 6

In the apparatus as employed in the example 3, the quartz disk 12 mounted above the starting rod was changed to the quartz disk without outside wall 43. Employing this apparatus, a glass particles deposit 11 was produced around the same starting rod and under the same sooting conditions as in the example 3. The parent material obtained by vitrifying the glass particles deposit 11 was fiberized. As a result, a variation in the outer diameter of the fiber due to the foreign matter occurred twice for 200km. In an ensuing screening test, the number of disconnection was once for 100km. This is considered due to the fact that the glass particulates adhering within the upper funnel 2 (attached in the previous operation) fell by a down flow of the clean air into the upper funnel 2.

### Example 7

Employing a glass particles deposit manufacturing apparatus 10A consisting of the reaction vessel 1 (inner diameter: 260mm) made of quartz except for the skeleton portion 36 made of Ni as shown in Fig. 10 and the upper funnel 2 and the lower funnel 3 (inner diameter: 250mm) made of Ni-Mo-Cr alloy and having the shape as shown in Fig. 12, like the glass particles deposit manufacturing apparatus as shown in Fig. 9, the glass particulates were deposited. A planar upper lid made of Ni without irregularities on the inner face was placed over the upper funnel 2, the upper lidhaving the support rod insertion opening 56 (inner diameter: 55mm) for inserting the support rod 6 (outer diameter: 50mm). The exhaust pipe 5 was installed to have its. central position flush with the central position (i.e., intermediate burner position) of three burners 4.

The number of dusts having a size of 0.3µm or more in the atmosphere outside the reaction vessel 1, the upper funnel 2.and the lower funnel 3 during the depositing operation of glass particulates was a density of 3.5×10⁷/m³.

Employing a core rod 7 (length: 500mm) with a diameter of 30mm having a core/clad portion, a starting rod was produced by welding an upper dummy rod 8 (outer diameter of thicker portion: 35mm) made of quartz glass at one end, and a lower dummy rod 9 (outer diameter of thicker portion: 40mm) made of quartz glass at the other end, as shown in Fig. 11. Then, a glass particles deposit 11 (outer diameter of 200mm) wasproduced under the same sooting conditions as in the example 3. The parent material obtained by vitrifying the glass particles deposit was fiberized. As a result, a variation in the outer diameter of the fiber due to the foreign matter occurred thirty times for 200km. In an ensuing screening test, the number of disconnection was twenty times for 100km. Cr was detected from the disconnection plane.

### Example 8

A glass particles deposit 11 (outer diameter.of 200mm) was produced under the exactly same conditions as in the example 7, except that the material of the upper funnel 2 and the lower funnel 3 was quartz. The parent material obtained by vitrifying. the glass particles deposit was fiberized. As a result, a variation in the outer diameter of the fiber due to the foreign matter occurred twenty five times for 200km. In an ensuing screening test, the number of disconnection was fifteen times for 100km.

### Example 9

A glass particles deposit 11 (outer diameter of 200mm) was produced under the same conditions as in the example 8, except that the quartz disk 12 having an outer diameter of 230mm with the outer peripheral wall 43 having a height of 100mm was attached to the dummy rod 8 of the starting rod, and the quartz disk 13 having an outer diameter of 230mm was attached to the dummy rod 9. The parent material obtained by vitrifying the glass particles deposit was fiberized. As a result, a variation in the outer diameter of the fiber due to the foreign matter occurred fifteen times for 200km. In an ensuing screening test, the number of disconnection was eight times for 100km.

### Example 10

Employing a glass particles deposit manufacturing apparatus consisting of the reaction vessel 1 (inner diameter of 310mm) made of Ni and the upper funnel 2 and the lower funnel 3 (inner diameter of 300mm) each communicating to the reaction vessel 1, as shown in Fig. 14, the glass particulates were deposited. The upper lid 14 having a hole (inner diameter of 55mm) for inserting the support rod 6 (outer diameter of 50mm) was placed over the upper funnel 2. Three burners (60, 62 and 63) for synthesizing glass particulates were installed in the reaction vessel 1. The clearance 65', 66' and 67' between the burner 60, 62, 63 and the burner fitting portion (hole) of the reaction vessel 1 was closed with a plate 77a made of Ni to be as small as possible, and the residual clearance was fully closed using a glass tape 77b. A starting rod was produced by welding the dummy rods 8 and 9 made of quartz to both ends of a glass rod 7 with a diameter of 30mm and a length of 500mm and having a core and clad portion, with the quartz disk 12 being attached to the upper dummy rod 8 to shield the heat.

The starting rod 90 heldby the support rod 6 was vertically placed within the reaction vessel 1, and traversed up and down by 1100mm at a rate of 200mm/min to deposit glass particulates from the burners 60, 62 and 63, while being rotated at 40rpm, so that a glass particles deposit was produced. SiCl₄: 4SLM (standard liters/min) as the source material, H₂: 80SLM for forming a flame, O₂: 40SLM, and Ar: 2SLM as the seal gas were supplied to three burners 60, 62 and 63 (with an interval of 150mm) having a diameter of 30mm.

To make a glass layer with a thickness of 30mm (93mm in glass diameter, 33mm in core rod diameter) as the final target, the above depositing operation was continued to produce the glass particles deposit having an outer diameter of 200mm. As a result, a variation in the outer diameter was excellent as ±1mm, and there was no crack. The deposition rate of glass particulates was 14.4g/min.

The produced glass particles deposit was heated to high temperatures, vitrified, and fiberized by the normal method. In an ensuing screening test, the number of disconnection was once for 100km and very excellent.

Herein, the screening test conducted in this example was a fiber strength test that was usually performed before shipping the products of submarine cable fiber, in which the disconnected part (low strength part) was cut off beforehand by applying on the fiber a load (about 1.8 to 2.2kgf) having an elongation percentage of 2% in a longitudinal direction of the fiber. In this test, the more disconnected parts, the more frequencies of examination or connected parts, increasing the final fiber cost many times over, whereby it is important that the number of disconnection is small.

Though in the example 4, the burners and the reaction vessel are individually combined to produce the glass particles deposit, the reaction vessel of burner and exhaust opening integral type as shown in Fig. 16 may be employed as the reaction vessel of Fig. 14 to produce the glass particles deposit, whereby the same effect can be obtained.

### Example 11

In the apparatus of Fig. 14 as in the example 10, the barrels 82, 83 and 84 (length L=300mm) made of quartz were attached around the burners 60, 62 and 63, and the O-rings 94, 95 and 96 were placed between the outside wall of the burners 60, 62 and 63, and the inside wall of the barrels 82, 83 and 84, with silicon resin being applied in the gap between the outer circumference of O-rings 94, 95 and 96 and the inside wall of the barrels 82, 83 and 84, as shown in Fig. 17.

A starting rod 90 was produced by welding the dummy rods 8 and 9 made of quartz to both ends of a core rod 7 with a diameter of 30mm and a length of 500mm and having a core and clad portion, with the quartz disk 12 being attached to the upper dummy rod 8 to shield the heat. The starting rod 90 held by the support rod 6 was vertically placed within the reaction vessel 1B, and traversed up and down by 1100mm at a rate of 200mm/min to deposit glass particulates from the burners 60, 62 and 63, while being rotated at 40rpm, so that a glass particles deposit was produced. The sort and flow rate of gas flowed through the burners were the same as in the example 10. While the glass particles deposit was being produced, the outer diameter of the glass particles deposit 11 was monitored at any time, so that the burners 60, 62 and 63 were moved in the diametric direction of the glass particles deposit outside the reaction vessel, in correspondence to a change (increase) in the monitored outside diameter, by the slide device 80.

To make a glass layer with a thickness of 30mm (93mm in glass diameter, 33mm in core rod diameter) as the final target, the above depositing operation was continued to produce the glass particles deposit having an outer diameter of 200mm. As a result, a variation in the outer diameter was excellent as ±1.5mm, and there was no crack. The deposition rate of glass particulates was 12g/min.

The produced glass particles deposit was heated to high temperatures, vitrified, and fiberized by the normal method. In an ensuing screening test, the number of disconnection was twice for 100km and very excellent.

### Example 12

A glass particles deposit was produced under the same conditions as in the example 11, except that the barrels 82, 83 and 84 made of quartz were attached around the burners 60, 62 and 63 without the O-rings.

The glass particles deposit (outer diameter of 200mm) finally obtained had an excellent variation in the outer diameter of ±2mm, and no sooting crack. Moreover, the glass particles deposit was heated to high temperatures, vitrified, and fiberized by the normal method. In an ensuing screening test, the number of disconnection was four times for 100km.

### Example 13

In the apparatus of Fig. 14 as in the example 10, the bellows pipe 101, 102 and 103 (length:L=300mm) were tightly attached around the burners 60, 62 and 63.

A starting rod 90 was produced by welding the dummy rods 8 and 9 made of quartz to both ends of a core rod 7 with a diameter of 30mm and a length of 500mm and having a core and clad portion, with the quartz disk 12 being attached to the upper dummy rod 8 to shield the heat. The starting rod 90 held by the support rod 6 was vertically placed within the reaction vessel 1C, and traversed up and down by 1100mm at a rate of 200mm/min to deposit glass particulates from the burners 60, 62 and 63, while being rotated at 40rpm, so that a glass particles deposit was produced. The sort and flow rate of gas flowed through the burners were the same as in the example 10. While the glass particles deposit was being produced, the outer diameter of the glass particles deposit 11 was monitored at any time, so that the burners 60, 62 and 63 were moved in the diametric direction of the glass particles deposit outside the reaction vessel, in correspondence to a change (increase) in the monitored outside diameter, by the slide device 80.

To make a glass layer with a thickness of 30mm (93mm in glass diameter, 33mm in core rod diameter) as the final target, the above depositing operation was continued to produce the glass particles deposit having an outer diameter of 200mm. As a result, a variation in the outer diameter was excellent as ±1.5mm, and there was no crack. The produced glass particles deposit was heated to high temperatures, vitrified, and fiberized by the normal method. In an ensuing screening test, the number of disconnection was once for 100km and very excellent.

### Example 14

Employing a glass particles deposit manufacturing apparatus consisting of the reaction vessel made of Ni and the upper funnel and the lower funnel as shown in Fig. 14, the glass particulates were deposited. The upper lid having a hole for inserting the support rod was placed over the upper funnel. Three burners for synthesizing glass particulates were installed in the reaction vessel. The clearance between the burner and the exhaust pipe (outer diameter φ 55mm) was closed with a plate made of Ni to be as small as possible, and further fully closed using a glass tape 77b. A starting rod was produced by welding the dummy rods made of quartz glass to both ends of a core rod (500mm) with a diameter of 30mm having a core and clad portion. The starting rod was vertically placed, and traversed up and down by 1100mm at a rate of 200mm/min to deposit glass particulates from the burners, while being rotated at 40rpm, so that a glass particles deposit was produced. Silicon tetrachloride: 4SLM (standard liters/min) as the source material, hydrogen: 80SLM for forming a flame, oxygen: 40SLM, and Ar: 2SLM as the seal gas were supplied to three burners (with an interval of 150mm) having a diameter of 30mm.

To make a glass layer with a thickness of 30mm (93mm in glass diameter, 33mm in core rod diameter) as the final target, the above depositing operation was continued. The glass particles deposit (outer diameter of 200mm) finally obtained had an excellent variation in the outer diameter of ±1mm, and there was no crack.

Moreover, the glass particles deposit was heated to high temperatures, vitrified, and fiberized. In an ensuing screening test, the number of disconnection was once for 100km. Though the clearance between the exhaust pipe and the reaction vessel is closed with the Ni plate and the glass tape, an aluminum plate or aluminum tape may be employed, whereby the same effect is attained.

### Example 15

Employing a glass particles deposit manufacturing apparatus consisting of the reaction vessel integral with the exhaust pipe as shown in Fig. 16, and the upper funnel and the lower funnel as shown in Fig. 14, the glass particulates were deposited. The upper lid having a hole for inserting the support rod was placed over the upper funnel. Three burners for synthesizing glass particulates were installed in the reaction vessel. A starting rod was produced by welding the dummy rods made of quartz glass to both ends of a core rod (500mm) with a diameter of 30mm having a core and clad portion, with the quartz disk being attached to each dummy rod made of quartz glass. The starting rod was vertically placed, and traversed up and down by 1100mm at a rate of 200mm/min to deposit glass particulates from the burners, while being rotated at 40rpm, so that a glass particles deposit was produced. Silicon tetrachloride: 4SLM (standard liters/min) as the source material, hydrogen: 80SLM for forming a flame, oxygen: 40SLM, and Ar: 2SLM as the seal gas were supplied to three burners (with an interval of 150mm) having a diameter of 30mm.

To make a glass layer with a thickness of 30mm (93mm in glass diameter, 33mm in core rod diameter) as the final target, the above depositing operation was repeated. The glass particles deposit (outer diameter of 200mm) finally obtained had an excellent variation in the outer diameter of ±1mm, and there was no sooting crack.

Moreover, the glass particles deposit was heated to high temperatures, vitrified, andfiberized. In an ensuing screening test, the number of disconnection was zero for 100km.

### Comparative examples

### Comparative example 1

Employing a glass particles deposit manufacturing apparatus 10 consisting of a combination of the reaction vessel 1 (inner diameter: 310mm) made of Ni and the upper funnel 2 and the lower funnel 3 (inner diameter: 300mm) as used in the example 1, with the same constitution as shown in Fig. 1 except that quartz sleeves 15, 16 and 17 were not installed, the glass particulates were deposited around a starting rod.

The upper lid 14 had a structure as shown in Figs. 6 and 7, inwhich the support rod insertion opening 27 (inner diameter: 55mm) for inserting the support rod 6 (outer diameter: 50mm) is provided in the center, and the outer circumferential wall 28 made of quartz and having a height of 1000mm is installed around the support rod insertion opening 27 to encircle the support rod 6. However, no clean gas was introduced during the depositing operation of glass particulates. The number of dusts having a size of 0.3µm or more in the atmosphere outside the reaction vessel 1, the upper funnel 2 and the lower funnel 3 during the operation was a density of 3.5×10⁶/m³ or less.

Employing a core rod 7 (length: 500mm) with a diameter of 30mm having a core/clad portion, a starting rod was produced by welding an upper dummy rod 8 made of quartz glass at one end, and a lower dummy rod 9 made quartz glass at the other end. In this example, the quartz disk 12 and the quartz disk 13 were not attached.

To make a glass layer with a thickness of 30mm (93mm in glass diameter, 33mm in core rod diameter) as the final target under the exactly same depositing conditions of glass particulates as in the example 1, the above depositing operation was repeated to produce the glass particles deposit 11 having an outer diameter of 200mm. The produced glass particles deposit 11 was heated to high temperatures, vitrified, and fiberized. As a result, a variation (greater than +0.7µm with respect to the central value 125) in the outer diameter of the fiber due to the foreign matter occurred ten times for 200km. In an ensuing screening test, the number of disconnection was fifteen times for 100km.

### Comparative example 2

Employing a glass particles deposit manufacturing apparatus 10 consisting of a combination of the reaction vessel 1 (inner diameter: 310mm) made of Ni and the upper funnel 2 and the lower funnel 3 (inner diameter: 300mm) as used in the example 1, with the same constitution as shown in Fig. 1 except that quartz sleeves 15, 16 and 17 were not installed, the glass particulates were deposited around a starting rod.

The upper lid 14 had a structure in which the support rod insertion opening 27 (inner diameter: 55mm) for inserting the support rod 6 (outer diameter: 50mm) is provided in the center (the outer circumferential wall 28 of Fig. 7 and the bellows pipe of Fig. 8 are not provided). The number of dusts having a size of 0.3µm or more in the atmosphere outside the reaction vessel 1, the upper funnel 2 and the lower funnel 3 during the depositing operation of glass particulates was a density of 3.5×10⁶/m³ or less.

Employing a core rod 7 (length: 500mm) with a diameter of 30mm having a core/clad portion, a starting:rod was produced by welding an upper dummy rod 8 made of quartz glass at one end, and a lower dummy rod 9 made of quartz glass at the other end. In this example, the quartz disk 12 and the quartz disk 13 were not attached.

To make a glass layer with a thickness of 30mm (93mm in glass diameter, 33mm in core rod diameter) as the final target under the exactly same depositing conditions of glass particulates as in the example 1, the above depositing operation was repeated to produce the glass particles deposit 11 having an outer diameter of 200mm. The produced glass particles deposit 11 was heated to high temperatures, vitrified, and fiberized. As a result, a variation (greater than +0.7µm with respect to the central value 125) in the outer diameter of the fiber due to the foreign matter occurred forty times for 200km. In an ensuing screening test, the number of disconnection was forty five times for 100km.

### Comparative example 3

In the apparatus as used in the example 3, the reaction vessel 1 was made of Ni-Mo-Cr alloy. The inner face 54 of the upper lid 38 was provided with three concave portions having a diameter of 10mm and a depth of 10mm to make the surface irregular. At this time, the number of dusts having a size of 0.3µm or more in the atmosphere outside the reaction vessel 1, the upper funnel 2 and the lower funnel 3 was a density of 17.5×10³/m³ or less.

Employing this apparatus, a glass particles deposit 11 was produced with the same starting rod and under the same sooting conditions as in the example 3. The parent material obtained by vitrifying the glass particles deposit was fiberized. As a result, a variation in the outer diameter of the fiber due to the foreign matter occurred forty times for 200km. In an ensuing screening test, the number of disconnection was four times for 100km. Cr was detected from the disconnected face.

Moreover, employing this apparatus, the glass particulates were deposited ten times repeatedly. Consequently, the glass particulates were deposited on the irregularities (concavities of φ10mm) of the upper lid 38, and the deposited glass particulates fell down during the operation of the apparatus to adhere to the glass particles deposit 11. As a result, a variation in the glass diameter at the time of fiberization was increased from 13 to 26 times (200km), and the number of disconnection was increased from 4 to 8 times (100km) in the screening test.

### Comparative example 4

Employing the same apparatus as used in the example 3, except that the reaction vessel 1 had an inner diameter of 410mm and the upper funnel 2 and the lower funnel 3 had an inner diameter of 400mm, the glass particulates were deposited. The upper lid 38 made of Ni having the support rod insertion opening 56 (inner diameter: 55mm) for inserting the support rod 6 (outer diameter: 50mm) was placed over the upper funnel 2.

The number of dusts having a size of 0.3µm or more in the atmosphere outside the reaction vessel 1, the upper funnel 2 and the lower funnel 3 during the operation was a density of 17.5×10³/m³ or less.

Employing a core rod 7 (length: 500mm) with a diameter of 30mm having a core/clad portion, a starting rod was produced by welding an upper dummy rod 8 (outer diameter of thicker portion: 40mm) made of quartz glass at one end, and a lower dummy rod 9 (outer diameter of thicker portion: 35mm) made of quartz glass at the other end. In this example, the quartz disk 12 having the outer circumferential wall 43 was attached to the dummy rod 8 and the quartz disk 13 was attached to the dummy rod 9.

The quartz disk 12 had an outer diameter of 230mm, and was composed of the disk 42 with a mounting hole 40 having a diameter of 31mm with an outer circumferential wall 43 having a height of 100mm attached around the outer circumference of the disk 42. The quartz disk 13 had an outer diameter of 230mm, and was composed of the disk 48 with a mounting hole 46 having a diameter of 36mm.

To make a glass layer with a thickness of 30mm (90mm in glass diameter) as the final target under the same conditions as in the example 3, the above operation was repeated to produce .a glass particles deposit 11 having an outer diameter of 200mm. The produced glass particles deposit 11 was heated to high temperatures, vitrified, and fiberized. As a result, a variation in the outer diameter of the fiber due to the foreign matter occurred ten times for 200km. In an ensuing screening test, the number of disconnection was four times for 100km.

### Comparative example 5

In the apparatus as used in the example 3, the support rod insertion opening 56 of the upper lid 37 was expanded to 70mm, no nitrogen gas was blown into the clearance portion between the support rod 6 and the support rod insertion opening 56, and the number of dusts having a size of 0.3µm or more in the atmosphere outside the upper funnel 2 was increased to a density of 3.5×10⁷/m³ or less (almost normal atmospheric conditions).

Employing this apparatus, a glass particles deposit 11 was producedwith the same starting rod and under the same sooting conditions as in the example 3. The parent material obtained by vitrifying the glass particles deposit was fiberized. As a result, a variation in the outer diameter of the fiber due to the foreign matter occurred fourteen times for 200km. In an ensuing screening test, the number of disconnection was six times for 100km.

### Comparative example 6

Employing a glass particles deposit manufacturing apparatus consisting of the reaction vessel 1 (inner diameter of 310mm) made of Ni and the upper funnel 2 and the lower funnel .3 (inner diameter of 300mm) each communicating to the reaction vessel 1, as shown in Fig. 14, the glass particulates were deposited. The upper lid 14 having a hole (inner diameter of 55mm) for inserting the support rod 6 (outer diameter of 50mm) was placed over the upper funnel 2. Three burners (60, 62 and 63) for synthesizing glass particulates were installed in the reaction vessel 1. The clearance between the burner 60, 62, 63 and the burner fitting portion (hole) of the reaction vessel 1 was 10mm, but none was placed around the burners.

A starting rod 90 was produced by welding the dummy rods 8 and 9 made of quartz to both ends of a glass rod 7 with a diameter of 30mm and a length of 500mm and having a core and clad portion, with the quartz disk 12 being attached to the upper dummy rod 8 to shield the heat.

The starting rod 90 held by the support rod 6 was vertically placed within the reaction vessel 1, and traversed up and down by 1100mm at a rate of 200mm/min to deposit glass particulates from the burners 60, 62 and 63, while being rotated at 40rpm, so that a glass particles deposit was produced. The sort and flow rate of gas flowed through three burners (an interval of 150mm) with a diameter of 30mm were the same as in the example 10. To make a glass layer with a thickness of 30mm (93mm in glass diameter, 33mm in core rod diameter) as the final target, the above depositing operation was continued to produce the glass particles deposit having an outer diameter of 200mm.

The produced glass particles deposit had a variation in the outer diameter as large as ±5mm, with a sooting crack, and was a non-conforming article that could not be passed to the next process.

### Comparative example 7

Employing a glass particles deposit manufacturing apparatus consisting of the reaction vessel made of Ni and the upper funnel and the lower funnel as shown in Fig. 16, the glass particulates were deposited. The upper lid having a hole for inserting the support rod was placed over the upper funnel. Three burners for synthesizing glass particulates were installed in the reaction vessel. The clearance between the exhaust pipe (outer diameter φ of 50mm) and the reaction vessel hole (hole diameter φ of 70mm) was 20mm in outer diameter difference, and none was installed around the exhaust pipe. A starting rod was produced by welding the dummy rods made of quartz glass to both ends of a glass rod (500mm) with a diameter of 30mm and having a core and clad portion, with the quartz disk being attached to each dummy rod made of quartz glass. The starting rod was vertically placed, and traversed up and down by 1100mm at a rate of 200mm/min to deposit glass particulates from the burners, while being rotated at 40rpm, so that a glass particles deposit was produced. Silicon tetrachloride: 4SLM (standard liters/min) as the source material, hydrogen: 80SLM for forming a flame, oxygen: 40SLM, and Ar: 2SLM as the seal gas were supplied to the three burners (interval of 150mm) with a diameter of 30mm.

To make a glass layer with a thickness of 30mm (93mm in glass diameter, 33mm in core rod diameter) as the final target, the above depositing operation was repeated.

The produced glass particles deposit (outer diameter of 200mm) had a variation in the outer diameter as large as ±5mm, with a sooting crack, and could not be passed to the downstream process.

### Comparative example 8

Employing a glass particles deposit manufacturing apparatus consisting of the reaction vessel made of Ni and the upper funnel and the lower funnel as shown in Fig. 16, the glass particulates were deposited. The upper lid having a hole for inserting the support rod was placed over the upper funnel. Three burners for synthesizing glass particulates were installed in the reaction vessel. The clearance between the exhaust pipe (outer diameter φ of 50mm) and the reaction vessel hole (hole diameter φ of 55mm) was 5mm in outer diameter difference, and none was installed around the exhaust pipe. A starting rod was produced by welding the dummy rods made of quartz glass to both ends of a glass rod (500mm) with a diameter of 30mm and having a core and clad portion, with the quartz disk being attached to each dummy rod made of quartz glass. The starting rod was vertically placed, and traversed up and down by 1100mm at a rate of 200mm/min to deposit glass particulates from the burners, while being rotated at 40rpm, so that a glass particles deposit was produced. Silicon tetrachloride: 4SLM (standard liters/min) as the source material, hydrogen: 80SLM for forming a flame, oxygen: 40SLM, and Ar: 2SLM as the seal gas were supplied to the three burners (interval of 150mm) with a diameter of 30mm.

To make a glass layer with a thickness of 30mm (93mm in glass diameter, 33mm in core rod diameter) as the final target, the above depositing operation was repeated.

The produced glass particles deposit (outer diameter of 200mm) had a variation in the outer diameter as good as ±1.5mm, with a sooting crack. The produced glass particles deposit was heated to high temperatures, vitrified, and fiberized. In an ensuing screening test, the number of disconnection was fifteen for 100km.

The specific embodiments of the present invention have been described above in detail, but it will be apparent to those skilled to the art that various changes or modifications may be.made thereto without departing from the spirit and scope of the invention.

This application is based on Japanese Patent Application filed on 14 June 2001 (JP-A-2001-180404), Japanese Patent Application filed on 19 June 2001 (JP-A-2001-185174), and Japanese Patent Application filed on 19 June 2001 (JP-A-2001-185175), its contents being incorporated herein for reference.

### Industrial Applicability

With the apparatus of this invention, if the reaction vessel, and the upper funnel and the lower funnel are made of metal, it is possible to relieve an adverse effect such as production of impurities due to metal. Also, it is possible to efficiently exhaust the floating dusts out of the apparatus, the floating dusts containing glass particulates floating within the apparatus and undeposited during the manufacture of the glass particles deposit. Further, it is possible to prevent the foreign matter from being mixed externally. Therefore, the glass particles deposit of stable quality can be manufactured without mixing the foreign matter into the glass particles deposit.

Also, it is possible to prevent the foreign matter from being mixed externally by making a clearance between the upper lid and the support rod narrower, introducing a clean gas into the clearance, and reducing the number of dusts in the atmosphere of the outer circumferential portion. Moreover, it is possible to suppress production of the metallic foreign matter by making the apparatus of quartz.

Also, with this invention, it is possible to reduce the number of foreign matter in the glass particles deposit by preventing the outside air frombeingmixed through the clearance between the burner fitting portion (hole) of the reaction vessel and the burner, whereby the glass particles deposit with less variation (deformation) in the outer diameter and less cracks can be manufactured. With the method of the invention in which a portion of the burner protruding out of the reaction vessel and the burner fitting portion are covered with the barrel or bellows pipe, it is possible to almost fully prevent the outside air from being mixed through the periphery of burner to attain the above effect by the OVD method of depositing glass particulates while moving the burners in the diametric direction of the glass particles deposit in correspondence to an increase in the outer diameter of the glass particles deposit.

As will be apparent from the data of deposition rate in the examples 10 and 11, when the burners are tightly fixed in the reaction vessel and glass particulates are deposited without moving the burners in the diametric direction of the glass particles deposit in accordance with this invention, there is the effect of increasing the deposition rate of glass particulates.

## Claims

1. An apparatus for manufacturing a glass particles deposit, comprising:
an upper funnel having an upper lid through which a support rod connected to a lifting device is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** a sleeve made of quartz is installed inside said reaction vessel.

2. An apparatus for manufacturing a glass particles deposit, comprising:
an upper funnel having an upper lid through which a support rod connected to a lifting device is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** a sleeve made of quartz is installed inside said upper funnel and said lower funnel.

3. An apparatus for manufacturing a glass particles deposit, comprising:
an upper funnel having an upper lid through which a support rod connected to a li fting device is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** a difference between the inner diameter of a support rod insertion opening of said upper lid and the outer diameter of said support rod is made 10mm or less, and an outer circumferential wall having a height of 5mm or more is provided around the outer circumference of said support rod insertion opening.

4. An apparatus for manufacturing a glass particles deposit, comprising:
an upper funnel having an upper lid through which a support rod connected to a lifting device is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** a bellows pipe linking said upper lid and said lifting device upwardly provided is installed in a form covering said support rod.

5. The apparatus for manufacturing the glass particles deposit according to claim 1 or 2, **characterized in that** a difference between the inner diameter of a support rod insertion opening of said upper lid and the outer diameter of said support rod is 10mm or less, and an outer circumferential wall having aheight of 5mm or more isprovided around the outer circumference of said support rod insertion opening.

6. The apparatus for manufacturing the glass particles deposit according to claim 1 or 2, **characterized in that** a bellows pipe linking said upper lid and said lifting device upwardly provided is installed in a form covering said support rod.

7. The apparatus for manufacturing the glass particles deposit according to claim 1 or 2, **characterized in that** said sleeve made of quartz is cylindrical.

8. The apparatus for manufacturing the glass particles deposit according to claim 3 or 5, **characterized in that** a clean gas inlet tube for introducing a clean gas between said support rod and said outer circumferential wall is installed.

9. The apparatus for manufacturing the glass particles deposit according to claim 4 or 6, **characterized in that** a clean gas inlet tube for introducing a clean gas into said bellows pipe is installed.

10. Amethod for manufacturing a glass particles deposit, comprising:
an upper funnel having an upper lid through which a support rod connected to a li fting device is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** the glass particles deposit is manufactured in said reaction vessel with a sleeve made of quartz placed inside.

11. A method for manufacturing a glass particles deposit, comprising:
an upper funnel having an upper lid through which a support rod connected to a lifting device is inserted tobe freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** the glass particles deposit is manufactured using said upper funnel and said lower funnel with a sleeve made of quartz placed inside.

12. Amethod for manufacturing a glass particles deposit, comprising:
an upper funnel having an upper lid through which a support rod connected to a lifting device is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** the glass particles deposit is manufactured in which a difference between the inner diameter of a support rod insertion opening of said upper lid and the outer diameter of said support rod is 10mm or less, and an outer circumferential wall having a height of 5mm or more is provided around the outer circumference of said support rod insertion opening.

13. Amethod for manufacturing a glass particles deposit, comprising:
an upper funnel having an upper lid through which a support rod connected to a lifting device is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** the glass particles deposit is manufactured using an apparatus in which a bellows pipe links said upper lid and said lifting device upwardly provided placed in a form covering said support rod.

14. The method for manufacturing the glass particles deposit according to claim 10 or 11, **characterized in that** the . glass particles deposit is manufactured in which a difference between the inner diameter of a support rod insertion opening of said upper lid and the outer diameter of said support rod is 10mm or less, and an outer circumferential wall having a height of 5mm or more is provided around the outer circumference of said support rod insertion opening.

15. The method for manufacturing the glass particles deposit according to claim 10 or 11, **characterized in that** the glass particles deposit is manufactured in which a bellows pipe links said upper lid and said lifting device upwardly provided is placed in a form covering said support rod.

16. The method for manufacturing the glass particles deposit according to claim 10 or 11, **characterized in that** the glass particles deposit is manufactured in which said sleeve made of quartz is cylindrical and a difference between the inner diameter of said sleeve and the maximum outer diameter of the glass particles deposit is 100mm or less.

17. The method for manufacturing the glass particles deposit according to claim 14, **characterized in that** the glass particles deposit is manufactured in which a clean gas inlet tube for introducing a clean gas between said support rod and said outer circumferential wall is installed.

18. The method for manufacturing the glass particles deposit according to claim 15, **characterized in that** the glass particles deposit is manufactured in which a clean gas inlet tube for introducing a clean gas into said bellows pipe is installed.

19. An apparatus for manufacturing a glass particles deposit, comprising:
an upper funnel having an upper lid through which a support rod is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** 50% or more of the constituent material of said reaction vessel is quartz.

20. An apparatus for manufacturing a glass particles deposit, comprising:
an upper funnel having an upper lid through which a support rod is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** said reaction vessel, said upper funnel or said lower funnel is cylindrical, and a difference between the inner diameter of said reaction vessel, said upper funnel or said lower funnel and the maximum outer diameter of the glass particles deposit is 100mm or less.

21. An apparatus for manufacturing a glass particles deposit, comprising:
an upper funnel having an upper lid through which a support rod is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** a disk moving along with said starting rod and having an outer circumferential wall for accepting a falling substance from above is installed above an effective part of said starting rod.

22. An apparatus for manufacturing a glass particles deposit, comprising:
an upper funnel having an upper lid through which a support rod is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** a diskmoving along with the starting rod is installed below an effective part of said starting rod.

23. The apparatus for manufacturing the glass particles deposit according to any one of claims 20 to 22, **characterized in that** said reaction vessel, said upper funnel or said lower funnel is cylindrical, and a difference between the inner diameter of said reaction vessel, said upper funnel or said lower funnel and the outer diameter of said disk is 100mm or less.

24. An apparatus for manufacturing a glass particles deposit, comprising:
an upper funnel having an upper lid through which a support rod is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** a gas inlet tube for introducing a clean gas into said upper funnel is attached downward so that an angle of said gas inlet tube to a central axis of said upper funnel is less than 90°.

25. An apparatus for manufacturing a glass particles deposit, comprising:
an upper funnel having an upper lid through which a support rod is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** a gas inlet tube for introducing a clean gas into said lower funnel is attached upward so that an angle of said gas inlet tube to a central axis of said lower funnel is less than 90°.

26. An apparatus for manufacturing a glass particles deposit, comprising:
an upper funnel having an upper lid through which a support rod is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** said upper lid has a dual structure without irregularities on the inner surface.

27. The apparatus for manufacturing the glass particles deposit according to claim 26, **characterized in that** a difference between the inner diameter of said support rod insertion opening in the center of the upper lid and the outer diameter of the support rod is 40mm or less.

28. An apparatus for manufacturing a glass particles deposit, comprising:
an upper funnel having an upper lid through which a support rod is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** an exhaust tube is place so that the central position of said exhaust tube is above an intermediate position between the uppermost burner and the lowermost burner.

29. Amethod for manufacturing a glass particles deposit, using an apparatus for manufacturing the glass particles deposit, comprising:
an upper funnel having an upper lid through which a support rod is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** 50% or more of the constituent material of said reaction vessel is quartz to manufacture the glass particles deposit.

30. The method for manufacturing the glass particles deposit according to claim 29, **characterized in that** said reaction vessel, said upper funnel or said lower funnel is cylindrical, and a difference between the inner diameter of said reaction vessel, said upper funnel or said lower funnel and the maximum outer diameter of the glass particles deposit is 100mm or less to manufacture the glass particles deposit.

31. A method for manufacturing a glass particles deposit, using an apparatus formanufacturing the glass particles deposit, comprising:
an upper funnel having an upper lid through which a support rod is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** a disk moving along with said starting rod and having an outer circumferential wall for accepting a falling substance from above is installed above an effective part of said starting rod to manufacture the glass particles deposit.

32. A method for manufacturing a glass particles deposit, using an apparatus formanufacturing the glass particles deposit, comprising:
an upper funnel having an upper lid through which a support. rod is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** a diskmoving along with the starting rod is installed below an effective part of said starting rod to manufacture the glass particles deposit.

33. Amethod for manufacturing a glass particles deposit, using an apparatus formanufacturing the glassparticles deposit, comprising:
an upper funnel having an upper lid through which a support rod is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** said reaction vessel, said upper funnel or said lower funnel is cylindrical, and a difference between the inner diameter of said reaction vessel, said upper funnel or said lower funnel and the outer diameter of said disk is 100mm or less to manufacture the glass particles deposit.

34. Amethod for manufacturing a glass particles deposit, using an apparatus formanufacturing the glass particles deposit, comprising:
an upper funnel having an upper lid through which a support rod is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** a clean gas containing dusts having a size of 0.3µm or greater at a density of 3.5×10⁴ /m³ or less is introduced into said upper funnel at a flow rate of one liter/min or more, and a gas inlet tube for introducing the clean gas into said upper funnel is attached downward so that an angle of said gas inlet tube to the central axis of said upper funnel is less than 90°.

35. Amethod for manufacturing a glass particles deposit, using an apparatus formanufacturing the glass particles deposit, comprising:
an upper funnel having an upper lid through which a support rod is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** a clean gas containing dusts having a size of 0.3µm or greater at a density of 3.5×10⁴ /m³ or less is introduced into said lower funnel at a flow rate of one liter/min or more, and a gas inlet tube for introducing the clean gas into said lower funnel is attached upward so that an angle of said gas inlet tube to the central axis of said lower funnel is less than 90°.

36. Amethod for manufacturing a glass particles deposit, using an apparatus formanufacturing the glass particles deposit, comprising:
an upper funnel having an upper lid through which a support rod is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** said upper lid has a dual structure without irregularities on the inner surface, and a clean gas containing dusts having a size of 0.3µm or greater at a density of 3.5×10⁴ /m³ or less is blown into a clearance portion between a support rod insertion opening in the center of the upper lid and said support rod at a flow rate of one liter/min or more to manufacture the glass particles deposit.

37. The method for manufacturing the glass particles deposit according to claim 36, **characterized in that** a difference between the inner diameter of said support rod insertion opening in the center of the upper lid and the outer diameter of said support rod is 10mm or less.

38. Amethod for manufacturing a glass particles deposit, using an apparatus formanufacturing the glass particles deposit, comprising:
an upper funnel having an upper lid through which a support rod is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** an exhaust tube is place so that the central position of said exhaust tube is above an intermediate position between the uppermost burner and the lowermost burner.

39. Amethod for manufacturing a glass particles deposit, using an apparatus formanufacturing the glass particles deposit, comprising:
an upper funnel having an upper lid through which a support rod is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** an outer atmosphere of the reaction vessel, the upper funnel and the lower funnel contains dusts having a size of 0.3µm or greater at a density of 3.5×10⁵ /m³ or less to manufacture the glass particles deposit.

40. An apparatus for manufacturing a glass particles deposit, comprising:
an upper funnel having an upper lid through which a support rod is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** there is air-tightness between said burner and a burner fitting portion of said reaction vessel.

41. The apparatus for manufacturing the glass particles deposit according to claim 40, **characterized in that** a gap between said burner and the fitting portion of said reaction vessel is sealed with a sealant.

42. An apparatus for manufacturing a glass particles deposit, comprising:
an upper funnel having an upper lid through which a support rod is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** said reaction vessel has a side wall integrally formed with the burners.

43. An apparatus for manufacturing a glass particles deposit, comprising:
an upper funnel having an upper lid through which a support rod is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** a barrel is equipped having a larger inner diameter than the outer diameter of said burner and air-tightly covering a burner fitting portion of said reaction vessel and a burner portion protruding out of said reaction vessel.

44. The apparatus for manufacturing the glass particles deposit according to claim 43, **characterized in that** the axial length of said barrel is 10mm or greater.

45. The apparatus for manufacturing the glass particles deposit according to claim 43 or 44, **characterized in that** the material of said barrel is quartz.

46. The apparatus for manufacturing the glass particles deposit according to any one of claims 43 to 45, **characterized in that** a gap between said barrel and said burner is air-tightly sealed with an O-ring.

47. An apparatus for manufacturing a glass particles deposit, comprising:
an upper funnel having an upper lid through which a support rod is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** a bellows pipe is equipped having a larger inner diameter than the outer diameter of said burner and air-tightly covering a burner fitting portion of said reaction vessel and a burner portion protruding out of said reaction vessel.

48. Amethod for manufacturing a glass particles deposit, using an apparatus formanufacturing the glass particles deposit, comprising:
an upper funnel having an upper lid through which a support rod is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** there is air-tightness to have no gap between said burner and a burner fitting portion of said reaction vessel, and the burner position is fixed in a radial direction of the glass particles deposit to manufacture the glass particles deposit.

49. A method for manufacturing a glass particles deposit, using an apparatus for manufacturing the glass particles deposit, comprising:
an upper funnel having an upper lid through which a support rod is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** a barrel is equipped having a larger inner diameter than the outer diameter of said burner and air-tightly covering a burner fitting portion of said reaction vessel and a burner portion protruding out of said reaction vessel, and the glass particles deposit is produced while said burner is beingmoved in a radial direction of the glass particles deposit in correspondence to a variation in the outer diameter of the glass particles deposit.

50. The method for manufacturing the glass particles deposit according to claim 49, **characterized in that** the axial length of said barrel is 10mm or more.

51. The method for manufacturing the glass particles deposit according to claim 49 or 50, **characterized in that** the material of said barrel is quartz.

52. The method for manufacturing the glass particles deposit according to any one of claims 49 to 51, **characterized in that** an O-ring is air-tightly installed between said barrel and said burner.

53. Amethod for manufacturing a glass particles deposit, using an apparatus formanufacturing the glass particles deposit, comprising:
an upper funnel having an upper lid through which a support rod is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** a bellows pipe is equipped having a larger inner diameter than the outer diameter of said burner and.air-tightly covering a burner fitting portion of said reaction vessel and a burner portion protruding out of said reaction vessel, and the glass particles deposit is produced while said burner is being moved in a radial direction of the glass particles deposit in correspondence to a variation in the outer diameter of the glass particles deposit.

54. An apparatus for manufacturing a glass particles deposit, comprising:
an upper funnel having an upper lid through which a support rod is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** a gap between said reaction vessel and an exhaust pipe attached to said reaction vessel is sealed with a sealant.

55. The apparatus for manufacturing the glass particles deposit according to claim 54, **characterized in that** said sealant is a glass tape, an aluminum tape, an O-ring, an aluminum plate or an Ni plate.

56. The apparatus for manufacturing the glass particles deposit according to claim 54 or 55, **characterized in that** a difference between the outer diameter of the exhaust pipe and a.hole diameter of an exhaust pipe intake is from 2 to 10mm.

57. The apparatus for manufacturing the glass particles deposit according to any one of claims 54 to 56, **characterized in that** the material of the exhaust pipe and the reaction vessel is quartz, Ni or Ni based alloy.

58. An apparatus for manufacturing a glass particles deposit, comprising:
an upper funnel having an upper lid through which a support rod is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** said reaction vessel and the exhaust pipe are integrally provided.

59. Amethod for manufacturing a glass particles deposit, using an apparatus for manufacturing the glass particles deposit, comprising:
an upper funnel having an upper lid through which a support rod is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** a gap around an exhaust pipe attached to the reaction vessel is sealed with a sealant to manufacture the glass particles deposit.

60. The method for manufacturing the glass particles deposit according to claim 59, **characterized in that** a gap around the exhaust pipe is sealed with a sealant that is a glass tape, an aluminum tape, an O-ring, an aluminum plate or an Ni plate.

61. The method for manufacturing the glass particles deposit according to claim 59 or 60, **characterized in that** a difference between the outer diameter of the exhaust pipe and a hole diameter of an exhaust pipe intake is from 2 to 10mm.

62. The method for manufacturing the glass particles deposit according to any one of claims 59 to 61, **characterized in that** the material of the exhaust pipe and the reaction vessel is quartz, Ni or Ni based alloy to manufacture the glass particles deposit.

63. Amethod for manufacturing a glass particles deposit, using an apparatus formanufacturing the glass particles deposit, comprising:
an upper funnel having an upper lid through which a support rod is inserted to be freely lifted;
a reaction vessel provided with a burner and an exhaust pipe; and
a lower funnel;
wherein the glass particulates are deposited around the outer circumference of a starting rod supported by said support rod within said reaction vessel by an OVD method;
**characterized in that** said reaction vessel and the exhaust pipe are integrated.

64. The method for manufacturing the glass particles deposit according to claim 63, **characterized in that** the material of the exhaust pipe and the reaction vessel is quartz, Ni or Ni based alloy.
